(19) Europäisches Patentamt
European Patent Office
Office européen des brevets

(11) EP 2 626 395 A2

(12) # EUROPEAN PATENT APPLICATION

(43) Date of publication:
**14.08.2013 Bulletin 2013/33**

(51) Int Cl.:
*C09J 5/00* (2006.01) *C09J 7/02* (2006.01)

(21) Application number: **13154403.3**

(22) Date of filing: **07.02.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.02.2012 JP 2012024433**

(71) Applicant: **NITTO DENKO CORPORATION**
**Osaka 567 (JP)**

(72) Inventors:
- **Niwa, Masahito**
  **Ibaraki-shi, Osaka 567-8680 (JP)**
- **Miki, Kaori**
  **Ibaraki-shi, Osaka 567-8680 (JP)**
- **Matsuo, Naoyuki**
  **Ibaraki-shi, Osaka 567-8680 (JP)**
- **Takami, Nobuyuki**
  **Ibaraki-shi, Osaka 567-8680 (JP)**
- **Yamanaka, Eiji**
  **Ibaraki-shi, Osaka 567-8680 (JP)**
- **Hayashi, Youhei**
  **Ibaraki-shi, Osaka 567-8680 (JP)**

(74) Representative: **Grünecker, Kinkeldey,**
**Stockmair & Schwanhäusser**
**Leopoldstrasse 4**
**80802 München (DE)**

(54) **Method of stripping multiple plies of a pressure-sensitive adhesive layer, and a pressure-sensitive adhesive layer used therein**

(57) Problem to be Solved: The present invention provides a method of stripping multiple plies of a pressure-sensitive adhesive layer, capable of easily separating and dismantling the joint portion in a short time, without affecting the adherend involved.

Solution: The stripping method of the present invention strips the multiple plies of a pressure-sensitive adhesive layer, including a pressure-sensitive adhesive body having at least a pressure-sensitive adhesive layer containing heat-expandable fine particles and an adherend, the pressure-sensitive adhesive body and the adherend being laminated on each other, wherein: the multiple plies of a pressure-sensitive adhesive layer contain a coloring matter component, and the pressure-sensitive adhesive body and the adherend are stripped from each other, by irradiating the coloring matter with a laser light beam having a wavelength coinciding with the absorption wavelength of the coloring matter and by expanding the heat-expandable fine particles with the aid of the heat thus generated.

[Fig. 1]

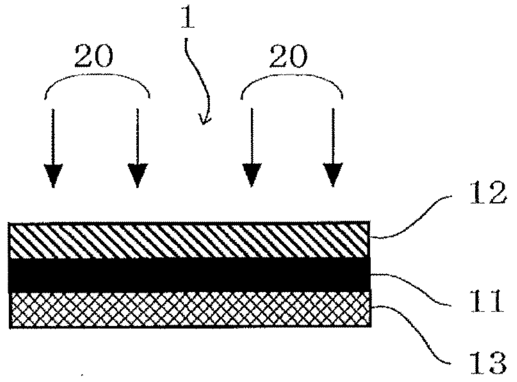


EP 2 626 395 A2

## Description

### Technical Field

The present invention relates to a method of stripping multiple plies of a pressure-sensitive adhesive layer and a pressure-sensitive adhesive layer used therein. More specifically, the present invention relates to a stripping method which maintains at the time of attachment a high initial adhesive force and a high adhesion reliability (in particular, repulsion resistance), and at the time of stripping enables the multiple plies of a pressure-sensitive adhesive layer to be easily stripped in a short time without affecting the adherend involved so as to allow the joint portion to be separated and dismantled, and relates to a pressure-sensitive adhesive layer used therein.

### Background Art

Pressure-sensitive adhesive tapes or sheets ("tapes or sheets" are sometimes referred to simply as "tapes" or "sheets") have hitherto been used in various applications. Typical examples of the pressure-sensitive adhesive sheets include an acrylic pressure-sensitive adhesive sheet having a pressure-sensitive adhesive layer formed of an acrylic pressure-sensitive adhesive composition.

Recently, as a result to enhanced environment consciousness, in the fields using such pressure-sensitive adhesive sheets as described above, resource saving and resource recycling have frequently been demanded. For example, acrylic pressure-sensitive adhesive sheets have been particularly required to establish the compatibility between the excellent adhesiveness to metal adherends and the excellent easiness in stripping from metal adherends, in the fields of vehicles, machines, electric appliances, building materials and the like, from the viewpoints of the yield improvement, reworking in processing, recycling, workability and the like.

A heat-peelable pressure-sensitive adhesive sheet having a pressure-sensitive adhesive layer, disposed on the base material thereof, including a foaming agent or an expansion agent such as a heat-expandable microsphere has hitherto been known (see, for example, Patent Literature 1). The heat peelable pressure-sensitive adhesive sheet is a pressure-sensitive adhesive sheet allowing the compatibility between the adhesiveness and the peelability after use to be established, and is decreased in adhesive force by foaming or expanding the agent such as the foaming agent by heating, and hence is capable of being easily stripped and dismantled or removed when the intended use is completed or when the heat peelable pressure-sensitive adhesive sheet is stripped and dismantled or removed from the adherend at the time of recycle or the like.

As a method for heating such a heat-peelable pressure-sensitive adhesive sheet, for example, the following methods are known: hot air heating, contact with a heated plate (such as a hot plate) and infrared ray heating. However, when hot air heating or contact with a heated plate is adopted, partial heating time delay occurs due to the shape-dependent heat capacity difference of the object to be heated, leading to a problem such that uniform heating needed for stripping takes a long time to degrade the heating efficiency. The hot air hearting involves a problem of the heat treatment unevenness due to the wind speed distribution. In the case of conventional heat peelable pressure-sensitive adhesive sheets, stripping takes time even by heating with infrared ray because no means for efficient absorption of infrared ray to generate heat is adopted.

When expensive electronic components such as liquid crystal panels, plasma panels or organic EL panels are adherends, heat applied for stripping sometimes damages the electronic components to inhibit the recycling thereof. Accordingly, there have been demanded stripping methods capable of efficiently heating the portions to be stripped without thermally affecting the adherends.

### Citation List

#### Patent Literature

Patent Literature 1: Japanese Patent Application Laid-Open No. 2010-265375

### Summary of Invention

#### Technical Problem

An object of the present invention is to provide a method of stripping multiple plies of a pressure-sensitive adhesive layer, capable of easily separating and dismantling the joint portion in a short time, without affecting the adherend involved.
Another object of the present invention is to provide a pressure-sensitive adhesive layer usable in the aforementioned

stripping method.

Solution to Problem

Specifically, the present invention provides
a method of stripping multiple plies of a pressure-sensitive adhesive layer, the multiple plies including a pressure-sensitive adhesive body having at least a pressure-sensitive adhesive layer containing heat-expandable fine particles, the pressure-sensitive adhesive body and an adherend being laminated on each other, wherein: the multiple plies of a pressure-sensitive adhesive layer contain a coloring matter component; and the pressure-sensitive adhesive body and the adherend are stripped from each other, by irradiating the coloring matter component with a laser light beam having a wavelength coinciding with the absorption wavelength of the coloring matter component and by expanding the heat-expandable fine particles with the aid of the heat thus generated.
In the method of stripping multiple plies of a pressure-sensitive adhesive layer, the pressure-sensitive adhesive layer may also contain the coloring matter component.
In the method of stripping multiple plies of a pressure-sensitive adhesive layer, the adherend may also contain the coloring matter component.
In the method of stripping multiple plies of a pressure-sensitive adhesive layer, the pressure-sensitive adhesive body may have a pressure-sensitive adhesive layer and a support, and the support may contain the coloring matter component.
In the method of stripping multiple plies of a pressure-sensitive adhesive layer, the coloring matter component is preferably present in the vicinity of the interface between the pressure-sensitive adhesive layer and the adherend. In this case, the pressure-sensitive adhesive body may have a coloring matter component-containing layer containing the coloring matter component on the surface, on the adherend side, of the pressure-sensitive adhesive layer, or the adherend may have a coloring matter component-containing layer containing the coloring matter component on the surface thereof on the pressure-sensitive adhesive layer side.
The present invention also provides a pressure-sensitive adhesive layer to be used in the method of stripping multiple plies of a pressure-sensitive adhesive layer, wherein: the pressure-sensitive adhesive layer further contains an acrylic polymer; and the pressure-sensitive adhesive layer contains 10 to 200 parts by weight of heat-expandable fine particles in relation to 100 parts by weight of the acrylic polymer.
When the pressure-sensitive adhesive layer contains the coloring matter component, the pressure-sensitive adhesive layer further contains an acrylic polymer, and preferably contains 0.01 to 5 parts by weight of a coloring matter component in relation to 100 parts by weight of the acrylic polymer.
The acrylic polymer preferably includes the following monomers (a1), (a2) and (a3) as the constituents thereof.

(a1): An alkyl (meth)acrylate monomer having an alkyl group having 4 to 12 carbon atoms, and giving a glass transition temperature of lower than 0°C when polymerized into a homopolymer
(a2): A monomer having in the molecule thereof at least a nitrogen atom and an ethylenically unsaturated bond
(a3): A monomer (exclusive of the (a2)) having an ethylenically unsaturated bond in the molecule thereof, and giving a glass transition temperature of 0°C or higher when polymerized into a homopolymer

In the monomer mixture, in relation to the total amount (100% by weight) of (a1), (a2) and (a3), the content of (a1) is preferably 50 to 80% by weight, the content of (a2) is preferably 5 to 40% by weight and the content of (a3) is preferably 5 to 40% by weight.

Advantageous Effects of Invention

The method of stripping multiple plies of a pressure-sensitive adhesive layer of the present invention has the aforementioned constitution, hence maintains at the time of attachment a high initial adhesive force and a high adhesion reliability (in particular, repulsion resistance), and enables, when the pressure-sensitive body is stripped from the adherend, the multiple plies of a pressure-sensitive adhesive layer to be easily stripped and allows the joint portion to be easily separated and dismantled. In particular, only the joint portion is heated, and hence the adherend is only lightly affected and is not thermally damaged; accordingly, the method of stripping multiple plies of a pressure-sensitive adhesive layer of the present invention allows even expensive electronic components to be reused.
The pressure-sensitive adhesive layer of the present invention uses the stripping method of the present invention, and hence it is possible to constitute multiple plies of a pressure-sensitive adhesive layer capable of being stripped even when the adherend is not a special one.

Brief Description of Drawings

[Figure 1] Figure 1 is a schematic cross-sectional view illustrating an example of the method of stripping multiple plies of a pressure-sensitive adhesive layer of the present invention.
[Figure 2] Figure 2 is a schematic cross-sectional view illustrating another example of the method of stripping multiple plies of a pressure-sensitive adhesive layer of the present invention.
[Figure 3] Figure 3 is a schematic cross-sectional view illustrating yet another example of the method of stripping multiple plies of a pressure-sensitive adhesive layer of the present invention.
[Figure 4] Figure 4 is a schematic cross-sectional view illustrating still yet another example of the method of stripping multiple plies of a pressure-sensitive adhesive layer of the present invention.
[Figure 5] Figure 5 is a schematic cross-sectional view illustrating the first step of Preparation Example 1.
[Figure 6] Figure 6 is a schematic cross-sectional view illustrating the second step of Preparation Example 1.
[Figure 7] Figure 7 is a schematic cross-sectional view illustrating the third step of Preparation Example 1.
[Figure 8] Figure 8 is a schematic cross-sectional view illustrating the pressure-sensitive adhesive sheet obtained in Preparation Example 1.

Description of Embodiments

<Method of Stripping Multiple Plies of a Pressure-Sensitive Adhesive Layer of Present Invention>

The method of stripping multiple plies of a pressure-sensitive adhesive layer of the present invention (hereinafter, sometimes referred to as "the stripping method of the present invention") may be a method of stripping multiple plies of a pressure-sensitive adhesive layer, including a pressure-sensitive adhesive body having at least a pressure-sensitive adhesive layer containing heat-expandable fine particles and an adherend, the pressure-sensitive adhesive body and the adherend being laminated on each other, wherein: the multiple plies of a pressure-sensitive adhesive layer contain a coloring matter component; and the pressure-sensitive adhesive body and the adherend are stripped from each other, by irradiating the coloring matter with a laser light beam having a wavelength coinciding with the absorption wavelength of the coloring matter and by expanding the heat-expandable fine particles with the aid of the heat thus generated; the method of stripping multiple plies of a pressure-sensitive adhesive layer of the present invention is not particularly limited otherwise.

In the stripping method of the present invention, heat is generated by irradiating the coloring matter component with a laser light beam, and stripping occurs due to the expansion of the heat-expandable fine particles caused by the heat thus generated. In other words, it is conceivable that in the portion where no coloring matter component is present, no heat is generated.

Specific examples of the method of stripping multiple plies of a pressure-sensitive adhesive layer of the present invention include the following (1) to (3):

(1) a stripping method in which the pressure-sensitive adhesive layer contains the coloring matter component
(2) a stripping method in which the adherend contains the coloring matter component
(3) a stripping method in which the pressure-sensitive adhesive body has a support and the support contains the coloring matter component

Hereinafter, (1) to (3) are described sequentially in detail.

(1) The stripping method in which the pressure-sensitive adhesive layer contains the coloring matter component

Examples of the embodiment of the foregoing (1) include the embodiment shown in Figure 1. In Figure 1, a base material 13, the pressure-sensitive adhesive layer 11 containing the heat-expandable fine particles and the coloring matter component, and the adherend 12 are laminated in this order to form the multiple plies 1 of a pressure-sensitive adhesive layer; the multiple plies 1 of a pressure-sensitive adhesive layer are irradiated with a laser light beam 20 as shown with the arrows shown in Figure 1 to generate heat; thus, the heat-expandable fine particles are expanded, and the pressure-sensitive adhesive layer 11, which is the pressure-sensitive adhesive body in this case, and the adherend 12 are stripped from each other. In this case, it is conceivable that the pressure-sensitive adhesive layer 11 contains the coloring matter component, and hence the pressure-sensitive adhesive layer 11 itself generates heat, and the heat-expandable fine particles are expanded to allow the pressure-sensitive adhesive layer 11 and the adherend 12 to be stripped from each other.

Examples of the preferred embodiment of the foregoing (1) include an embodiment in which the coloring matter component is present in the vicinity of the interface between the pressure-sensitive adhesive layer 11 and the adherend 12; among such examples, the embodiment as shown in Figure 2 is more preferable. In Figure 2, the multiple plies of a pressure-sensitive adhesive layer 1 are formed by laminating the base material 13, the pressure-sensitive adhesive layer 11 and the adherend 12 in this order; the pressure-sensitive adhesive layer 11 contains the heat-expandable fine particles and the coloring matter component in the same manner as in Figure 1. However, the case of the embodiment shown in Figure 2 is different from the case of Figure 1 in that the pressure-sensitive adhesive layer 11 has a coloring matter component-containing layer 111 on the side of the adherend 12 and a coloring matter component-noncontaining layer 112 on the side of the base material 13. It is conceivable that when the pressure-sensitive adhesive layer 11 contains the coloring matter component in the vicinity of the interface with the adherend 12, the interface is heated to foam and the pressure-sensitive adhesive layer 11 is efficiently stripped from the adherend 12, and the effect of the generated heat on other portions is also suppressed.

"The vicinity of the interface" as referred to herein means that the vicinity may be located either in the pressure-sensitive adhesive layer or in the adherend, and is separated from the interface by a short distance. Specifically, "the vicinity of the interface" means that the vicinity is located at a distance from the interface of less than 50% of the thickness of the pressure-sensitive adhesive layer or the adherend. The distance from the interface is preferably 20% or less and more preferably 10% or less of the thickness of the pressure-sensitive adhesive layer or the adherend.
The foregoing statement that "the coloring matter component is present in the vicinity of the interface" specifically means that 30% or more of the coloring matter component is present in the vicinity of the interface.

As shown in Figure 2, the method for forming the pressure-sensitive adhesive layer 11 including the coloring matter component-containing layer 111 on the side of the adherend 12 and the coloring matter component-noncontaining layer 112 on the side of the base material 13 is not particularly limited; however, examples of such a method include a method in which a dye-containing layer is formed on the surface of the pressure-sensitive adhesive layer (for example, coated with the dye-containing layer with the below-described method), a method in which a dye-containing pressure-sensitive adhesive layer is laminated and a method in which a dye is unevenly distributed in a pressure-sensitive adhesive layer.

(2) The stripping method in which the adherend contains the coloring matter component

Examples of the embodiment of the foregoing (2) include the embodiment shown in Figure 3. In Figure 3, the base material 13, the pressure-sensitive adhesive layer 11 and the adherend 12 are laminated in this order to form the multiple plies 1 of a pressure-sensitive adhesive layer; the multiple plies 1, in which the adherend 12 contains the coloring matter component, of a pressure-sensitive adhesive layer are irradiated with a laser light beam 20 as shown with the arrows shown in Figure 3 to generate heat; thus, the heat-expandable fine particles are expanded, and the pressure-sensitive adhesive layer 11, which is the pressure-sensitive adhesive body in this case, and the adherend 12 are stripped from each other. In this case, it is conceivable that the adherend 12 contains the coloring matter component, and hence the adherend 12 generates heat, and the heat-expandable fine particles in the pressure-sensitive adhesive layer 11 are expanded to allow the pressure-sensitive adhesive layer 11 and the adherend 12 to be stripped from each other.

Examples of the preferred embodiment of the foregoing (2) include an embodiment in which the coloring matter component is present in the vicinity of the interface between the pressure-sensitive adhesive layer 11 and the adherend 12; among such examples, the embodiment as shown in Figure 4 is more preferable. In Figure 4, the multiple plies 1 of a pressure-sensitive adhesive layer is formed by laminating the base material 13, the pressure-sensitive adhesive layer 11 and the adherend 12 in this order; the adherend 12 contains the coloring matter component in the same manner as in Figure 3. However, the case of the embodiment shown in Figure 4 is different from the case of Figure 3 in that the adherend 12 has a coloring matter component-containing layer 121 on the side of the pressure-sensitive adhesive layer 11 and a coloring matter component-noncontaining layer 122 on the side opposite to the coloring matter-containing layer 121. In this case, it is conceivable that when adherend 12 contains the coloring matter component in the vicinity of the interface with the pressure-sensitive adhesive layer 11, the interface is heated to foam and the pressure-sensitive adhesive layer 11 is efficiently stripped from the adherend 12, and the effect of the generated heat on other portions is also suppressed.

As shown in Figure 4, the method for forming the adherend 12 including the coloring matter component-containing layer 121 on the side of the pressure-sensitive adhesive layer 11 and the coloring matter component-noncontaining layer 122 on the side opposite to the coloring matter component-containing layer 121 is not particularly limited; however, examples of such a method include a method in which a material such as glass, polycarbonate or acrylic resin is used as the coloring matter-noncontaining layer 122, and a coloring matter-containing base material is laminated or a coloring matter component-containing layer is formed (for example, applied) on the surface of the coloring matter-noncontaining layer 122.

(3) The stripping method in which the pressure-sensitive adhesive body has a support and the support contains the coloring matter component

Specific examples of the foregoing embodiment include a case in which the pressure-sensitive adhesive body has a configuration of pressure-sensitive adhesive layer/support or pressure-sensitive adhesive layer/support/pressure-sensitive adhesive layer, as viewed from the interface with the adherend. In the case of the present embodiment, it is conceivable that the support contains the coloring matter component, and hence the support generates heat, and the heat-expandable fine particles are expanded to allow the pressure-sensitive adhesive layer 11 and the adherend 12 to be stripped from each other.

<Laser>

As the laser light, the following can be adopted: the third harmonic or the fourth harmonic obtained from the lasers such as a semiconductor laser, a Nd-YAG laser, a fiber laser, an ArF excimer laser, a KrF excimer laser, a XeCl excimer laser or a YAG laser; the third harmonic or the fourth harmonic obtained from the solid laser such as a YLF laser or a YV04 laser; and laser light obtained from various oscillation devices such as a Ti:S laser, a semiconductor laser, a fiber laser and a carbon dioxide gas laser; the oscillation methods involved are not limited, and examples of the usable lasers include: so-called CW lasers (Continuous Wave Lasers) continuously radiating laser light and pulse lasers such as femtosecond lasers. Preferable among these are the infrared lasers such as a semiconductor laser, a Nd-YAG laser and a fiber laser because these infrared lasers are excellent in heat generating property.
The conditions required for the laser are not particularly limited; however, the laser light wavelength is 600 to 2500 nm and preferably 800 to 2000 nm. The laser light output is, for example, 5 to 70 W and preferably 20 to 50 W. The spot diameter of the laser light is 0.5 to 20 mmϕ and preferably 1 to 10 mmϕ. The scanning speed of the laser light is 5 to 40 mm/s and preferably 8 to 30 mm/s.
When the multiple plies of a pressure-sensitive adhesive layer is subjected to a heat stripping treatment with laser light, the treatment is controlled on the basis of the cumulative energy [J/cm$^2$]. The cumulative energy is the energy input to a unit area, and is obtained by multiplying the power density [W/cm$^2$] by the irradiation time [sec]; the cumulative energy is usually 10 to 200 [J/cm$^2$], preferably 20 to 150 [J/cm$^2$] and more preferably 40 to 80 [J/cm$^2$]. The power density is obtained by dividing the output power {W} of the laser light by the spot area [cm$^2$] of the laser light; the power density is usually 20 to 200 [W/cm$^2$], preferably 30 to 150 [W/cm$^2$] and more preferably 50 to 140 [W/cm$^2$]. Accordingly, for example, when an intended heating is performed, by changing any of the output power of the laser light, the irradiation area and the scanning speed, the energy input per unit area can be regulated.
In the case where an intended heating of the multiple plies of a pressure-sensitive adhesive layer is possible when the heating is performed under predetermined conditions (specifically, the laser power (W), the scanning speed (mm/s), the repetition frequency (MHz) and the spot diameter (μmϕ)), the present invention equalizes the input energy per unit length by increasing the laser power and increasing the scanning speed. Alternatively, it is possible to equalize the input energy per unit length by decreasing the laser power and decreasing the scanning speed.
Other laser processing conditions can be appropriately set according to the factors such as the type of the multiple plies of a pressure-sensitive adhesive layer. For example, when the heat splitting treatment is applied, the repetition frequency of the laser light is not particularly limited, and is usually preferably 1 kHz to 100 kHz. By regulating the repetition frequency of the laser light so as to fall within the foregoing range, the strippability can be improved.
The stripping method may be performed by scanning with the laser light one and the same area a plurality of times. In this case, each of the scannings may be performed under a different set of processing conditions or the same set of processing conditions.

<Coloring Matter Component>

The coloring matter component may be a dye having an absorption wavelength coinciding with the wavelength of the laser light beam used, and the coloring matter is not particularly limited. The coincidence of the wavelength of the laser light beam with the absorption wavelength of the coloring matter component allows the coloring matter to absorb the laser light and generate heat efficiently. The inclusion of the coloring matter component in the intended position allows only a specific portion to be heated. For example, when a Nd-YAG laser of 940 nm in wavelength is used, it is possible to heat an object (an adherend or a support) containing a visually black or dark blue coloring matter, dye or pigment (examples of such a substance include a black colorant, a blue colorant and a green colorant; preferably include the following black colorants, blue colorants and green colorants; alternatively include a black colorant; and preferably include the following black colorants).
The coloring matter component (light absorber) for absorbing the laser light and generating heat is not particularly limited; however, examples of the coloring matter include: black colorants (such as pigments such as carbon black; and

dyes such as aniline black and sulfur black); blue and green colorants (pigments such as inorganic pigments such as cobalt green, cobalt blue, Prussian blue, chromium oxide and ultramarine, and organic pigments such as cyanine blue, phthalocyanine blue, phthalocyanine green and quinacridone magenta; and dyes such as naphthol green, malachite green, methylene blue, indigo and indoaniline).

Examples of the component usablel other than the foregoing include: polymethine-based absorbers, diphenylmethane-based absorbers, triphenylmethane-based absorbers, quinone-based absorber, azo-based absorbers and diimmonium salts.

When a laser light having a wavelength of 800 to 1200 nm is used, for example, a commercially available product such as "Clearweld" (trade name, manufactured by Gentex Corp. (US)) can be used.

These coloring matter components exhibit the effects thereof through the inclusion thereof in the pressure-sensitive adhesive layer, the adherend or the support; however, these coloring matter components may also be applied to the surface of the pressure-sensitive adhesive layer, the adherend or the support. As the application means, for example, the following common techniques can be used: a dispenser, an ink-jet printer, screen printing, a two-fluid, one-fluid or ultrasonic spray and a stamper.

For example, when the pressure-sensitive adhesive layer contains a coloring matter component, the content of the coloring matter component in relation to 100 parts by weight of the pressure-sensitive adhesive layer is, for example, 0.01 to 3 parts by weight and preferably 0.02 to 2 parts by weight; when the pressure-sensitive adhesive layer further contains an acrylic polymer, the content of the coloring matter component in relation to 100 parts by weight of the acrylic polymer i.s, for example, 0.01 to 5 parts by weight and preferably 0.05 to 1 part by weight.

As described above, in the pressure-sensitive adhesive body, a coloring matter component-containing layer may be formed (for example, by application with the below-described device) on the adherend-side surface of the pressure-sensitive adhesive layer, or a coloring matter component-containing layer may be formed by laminating a coloring matter-containing pressure-sensitive adhesive layer on the adherend-side surface of the pressure-sensitive adhesive layer. The content of the coloring matter component in the coloring matter component-containing layer in relation to 100 parts by weight of the coloring matter component-containing layer is, for example, 0.01 to 10 parts by weight and preferably 0.05 to 5 parts by weight.

Alternatively, the constitution of the multiple plies of a pressure-sensitive layer may also be such that the adherend contains the coloring matter component and is capable of absorbing laser light, for example, light having a wavelength of 800 to 1000 nm.

When the adherend contains a coloring matter component, the content of the coloring matter component in relation to 100 parts by weight of the adherend is, for example, 0.01 to 10 parts by weight and preferably 0.05 to 5 parts by weight.

The pressure-sensitive adhesive body may include, as described above, a coloring matter component-containing layer on the adherend-side surface of the pressure-sensitive adhesive layer, and a coloring matter component-noncontaining layer on the opposite side of the coloring matter component-containing layer. The content of the coloring matter component in the coloring matter component-containing layer in relation to 100 parts by weight of the coloring matter component-containing layer is, for example, 0.01 to 100 parts by weight and preferably 0.05 to 50 parts by weight.

Similarly, when the pressure-sensitive adhesive body has a pressure-sensitive adhesive layer and a support, the constitution may also be such that the support contains the coloring matter component and is capable of absorbing laser light, for example, light having a wavelength of 800 to 1000 nm. Examples of such a support may include a black PET coated with carbon black (for example, carbon black(manufactured by Daisan Films Converting Co., Ltd.)).

When the support contains a coloring matter component, the content of the coloring matter component in relation to 100 parts by weight of the support is, for example, 0.01 to 10 parts by weight and preferably 0.05 to 5 parts by weight.

<Pressure-Sensitive Adhesive Layer>

The pressure-sensitive adhesive layer used in the method of stripping multiple plies of a pressure-sensitive adhesive layer of the present invention may contain heat-expandable fine particles and is otherwise not particularly limited, but may also contain the coloring matter component, if necessary.

Alternatively, the pressure-sensitive adhesive layer used in the method of stripping multiple plies of a pressure-sensitive adhesive layer of the present invention further includes an acrylic resin, wherein the pressure-sensitive adhesive layer is such that the content of the heat-expandable fine particles in relation to 100 parts by weight of the acrylic polymer is preferably 10 to 200 parts by weight, more preferably 15 to 100 parts by weight and furthermore preferably 20 to 80 parts by weight. When the content of the heat-expandable fine particles is less than 10 parts by weight, the pressure-sensitive adhesive layer formed of an pressure-sensitive adhesive composition tends to undergo an insufficient reduction, due to a heat treatment, of the contact area between the pressure-sensitive adhesive layer and the adherend. When the content of the heat-expandable fine particles exceeds 200 parts by weight, the cohesion failure of the pressure-sensitive adhesive layer formed of an pressure-sensitive adhesive composition tends to occur.

As described above, in the pressure-sensitive adhesive body, a coloring matter component-containing layer,

containing a coloring matter, may be formed (for example, by application with the below-described device) on the surface of the pressure-sensitive adhesive layer, or a coloring matter component-containing layer may be formed by laminating a coloring matter-containing pressure-sensitive adhesive layer on surface of the pressure-sensitive adhesive layer. The thickness of the coloring matter component-containing layer is not particularly limited, but is for example 0.5 to 50%, preferably 1.0 to 20% and more preferably 1.2 to 10%.

The coloring matter component-containing layer may include a pressure-sensitive adhesive in the base polymer thereof, and preferably includes, also as other compositions and the like, the below described composition and the like in conformity with the pressure-sensitive adhesive layer.

The acrylic polymer preferably includes the following monomers (a1), (a2) and (a3) as the constituent thereof.

(a1): An alkyl (meth)acrylate monomer having an alkyl group having 4 to 12 carbon atoms, and giving a glass transition temperature of lower than 0°C when polymerized into a homopolymer

(a2): A monomer having in the molecule thereof at least a nitrogen atom and an ethylenically unsaturated bond

(a3): A monomer (exclusive of the (a2)) giving a glass transition temperature of 0°C or higher when polymerized into a homopolymer and having an ethylenically unsaturated bond in the molecule thereof

The foregoing constitution possessed by the acrylic polymer further facilitates the formation of a pressure-sensitive adhesive layer which maintains at the time of attachment a high initial adhesive force and a high adhesion reliability (in particular, repulsion resistance), and is easily stripped at the time of stripping from the adherend so as to allow the joint portion to be separated and dismantled. In particular, such constitution of the acrylic polymer further facilitates the formation of a pressure-sensitive adhesive layer which has a high initial adhesive force and a high adhesion reliability (in particular, repulsion resistance) to a metal adherend at the time of attachment, and is decreased due to heating in adhesive force at the time of separating and dismantling the joint portion so as to allow the joint portion to be easily separated and dismantled.

In the monomer mixture, in relation to the total amount (100% by weight) of (a1), (a2) and (a3), the content of (a1) is preferably 50 to 80% by weight, the content of (a2) is preferably 5 to 40% by weight and the content of (a3) is preferably 5 to 40% by weight.

The "adhesive composition" is construed to include the meaning of "the composition for forming an adhesive." "The monomer mixture" means "a mixture composed only of monomer components." The pressure-sensitive adhesive composition is sometimes referred to as "the heat-expandable fine particle-containing pressure-sensitive adhesive composition."

In the present application, "the ethylenically unsaturated bond" means a radical polymerizable carbon-carbon double bond. The group having an ethylenically unsaturated bond is not particularly limited; however, examples of the group having an ethylenically unsaturated bond include a vinyl group, a vinylidene group, an allyl group and a (meth) acryloyl group. In present application, "monofunctional" means that an ethylenically unsaturated bond is present in a molecule, and "multifunctional" means that two or more ethylenically unsaturated bonds are present in a molecule.

"The glass transition temperature (Tg) when polymerized into a homopolymer" means the glass transition temperature (Tg) of the homopolymer of the concerned monomer," and means the glass transition temperature (Tg) of a polymer formed only of a monomer (sometimes referred to as a "monomer X") as the monomer component. Specifically, numerical values are presented in "Polymer Handbook" (3rd edition, John Wiley & Sons, Inc., 1989). The glass transition temperature (Tg) of a homopolymer not included in the foregoing literature means a value obtained by the following measurement method. Specifically, in a reactor equipped with a thermometer, a stirrer, a nitrogen introducing tube and a reflux condenser, 100 parts by weight of the monomer X, 0.2 parts by weight of 2,2'-azobisisobutyronitrile and 200 parts by weight of ethyl acetate as a polymerization solvent are placed, and the resulting mixture is stirred for 1 hour while nitrogen gas is being introduced. In this way, the oxygen in the polymerization system is removed, and then the mixture is increased in temperature to 63°C and is allowed to react for 10 hours. Next, the mixture is cooled down to room temperature to yield a homopolymer solution having a solid content concentration of 33% by weight. Next, the homopolymer solution is applied by casting on a release liner and dried to prepare a 2-mm thick test sample (a sheet-shaped homopolymer). Then, about 1 to 2 mg of the test sample was weighed and placed in an aluminum open cell, and the reversing heat flow (specific heat component) behavior is determined by using a temperature modulation DSC (trade name: "Q-2000," manufactured by TA Instruments Inc.), in an nitrogen atmosphere of 50 ml/min, at a temperature increase rate of 5°C/min. With reference to JIS-K-7121, the temperature at which a straight line equidistant from the straight lines extended from the low temperature-side baseline and the high temperature-side baseline of the obtained reversing heat flow and the curve of the step-like varying portion of the glass transition cross is defined as the glass transition temperature (Tg) when polymerized into the homopolymer.

The proportion of the monomer mixture in the pressure-sensitive adhesive layer of the present invention is not particularly limited, but is preferably 33% by weight or more (for example, 33 to 91% by weight) and more preferably 40% by weight or more (for example, 40 to 87% by weight) in relation to the total amount (100% by weight) of the

pressure-sensitive adhesive composition.

The (a1) is an alkyl (meth)acrylate monomer having an alkyl group having 4 to 12 carbon atoms, and giving a glass transition temperature of lower than 0°C when polymerized into a homopolymer. The (a1) is a monomer having a (meth)acryloyl group in the molecule thereof, and a monomer having an ethylenically unsaturated bond in the molecule thereof. The (a1) is a so-called monofunctional monomer.

Examples of the (a1) include the monomers listed in Table 1 presented below. In the monomer mixture, the (a1) monomers may be included each alone or in combinations of two or more thereof.

[Table 1]

TABLE 1

| (a1) | Glass transition temperature when polymerized into homopolymer [°C] |
|---|---|
| n-Butyl acrylate | -54 |
| sec-Butyl acrylate | -22 |
| 1,3-Dimethylbutyl acrylate | -15 |
| 2-Ethylbutyl acrylate | -50 |
| 2-Ethylhexyl acrylate | -50 |
| 2-Ethylhexyl methacrylate | -10 |
| n-Octyl acrylate | -65 |
| n-Octyl methacrylate | -20 |
| n-Nonyl acrylate | -58 |
| Lauryl acrylate | -3 |
| Lauryl methacrylate | -65 |

Among these (a1) monomers, the (a1) is more preferably an alkyl (meth)acrylate monomer having an alkyl group having 4 to 12 carbon atoms and giving a glass transition temperature of lower than -20°C when polymerized into a homopolymer, and furthermore preferably an alkyl (meth)acrylate monomer having an alkyl group having 4 to 12 carbon atoms and giving a glass transition temperature of lower than -40°C when polymerized into a homopolymer.

Specifically, the (a1) is preferably n-butyl acrylate, sec-butyl acrylate, 2-ethylbutyl acrylate, 2-ethylhexyl acrylate, n-octyl acrylate, n-octyl methacrylate, n-nonyl acrylate, lauryl acrylate or lauryl methacrylate; and the (a1) is more preferably n-butyl acrylate or 2-ethylhexyl acrylate.

In the monomer mixture, the content of (a1) in the total amount (100% by weight) of (a1), (a2) and (a3) is not particularly limited, but is preferably 50 to 80% by weight, more preferably 55 to 75% by weight and furthermore preferably 60 to 70% by weight because the (a1) is the main monomer component. When the content of (a1) is less than 50% by weight, there sometimes occurs a failure such that in the pressure-sensitive adhesive layer formed of the pressure-sensitive adhesive composition, the adhesion properties such as the initial laminating property (initial adhesive force) in an environment of normal temperature (23 ± 2°C) or low temperatures (for example, -40 to -10°C) are not sufficiently exhibited. On the other hand, when the content of (a1) exceeds 80% by weight, the adhesive force, the repulsion resistance, the aggregation property and the like are sometimes insufficient, due to the deficiency of (a2) and (a3).

The (a2) is a monomer having in the molecule thereof at least a nitrogen atom and an ethylenically unsaturated bond. The (a2) has an ethylenically unsaturated bond in the molecule thereof, and hence is a monofunctional monomer. The (a2) is a copolymerizable component of the (a1). In the monomer mixture, the (a2) monomers may be included each alone or in combinations of two or more thereof.

The (a2) is not particularly limited, but is preferably a monomer selected from the group consisting of N-vinyl cyclic amides and (meth)acrylamides.

Examples of the N-vinyl cyclic amide include the compounds represented by the following formula (1):

[Formula 1]

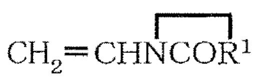

(1)

wherein in formula (1), $R^1$ represents a divalent organic group.

In formula (1), $R^1$ is preferably a saturated hydrocarbon group and more preferably an alkylene group having 3 to 5 carbon atoms or the like.

Examples of the N-vinyl cyclic amide include N-vinyl-2-pyrrolidone, N-vinyl-2-piperidone, N-vinyl-3-morpholinone, N-vinyl-2-caprolactam, N-vinyl-1,3-oxazin-2-one, N-vinyl-3,5-morpholinedione, N-vinylpyridine, N-vinylpyrimidine, N-vinylpiperazine and N-vinylpyrrole.

Examples of the (meth)acrylamides include (meth)acrylamide, N-alkyl(meth)acrylamide and N,N-dialkyl(meth) acrylamide. Examples of the N-alkyl(meth)acrylamide include N-ethyl(meth)acrylamide, N-n-butyl(meth)acrylamide and N-octylacrylamide. Examples of the N-alkyl(meth)acrylamide further include amino group-containing (meth)acrylamides such as dimethylaminoethyl(meth)acrylamide and diethylaminoethyl(meth)acrylamide. Next, examples of the N,N-dialkyl (meth)acrylamide include N,N-dimethyl(meth)acrylamide, N,N-diethyl(meth)acrylamide, N,N-dipropyl(meth)acrylamide, N,N-diisopriopyl(meth)acrylamide, N,N-di(n-butyl)(meth)acrylamide and N,N-di(t-butyl)(meth)acrylamide.

Examples of the (meth)acrylamides further include N-acryloyl group-containing cyclic (meth)acrylamides such as (meth)acryloyl morpholine, (meth)acryloylpyrrolidone and (meth)acryloylpyrrolidine.

Examples of the (meth)acrylamides further include N-hydroxyalkyl(meth)acrylamide monomers each having 1 to 4 carbon atoms. Examples of the N-hydroxyalkyl(meth)acrylamide monomers each having a hydroxyalkyl group having 1 to 4 carbon atoms include the compounds represented by the following formula (2):

[Formula 2] $CH_2=C(R^2)\ CONR^3R^4$ (2)

wherein in formula (2), $R^2$ represents a hydrogen atom or a methyl group, $R^3$ represents a hydroxyalkyl group having 1 to 4 carbon atoms and $R^4$ represents a hydrogen atom or a saturated hydrocarbon group having 1 to 10 carbon atoms.

In formula (2), $R^3$ may have a linear chain structure or a branched chain structure.

Examples of the N-hydroxyalkyl(meth)acrylamide monomers each having a hydroxyalkyl group having 1 to 4 carbon atoms include: N-methylol(meth)acrylamide, N-(2-hydroxyethyl)acrylamide, N-(2-hydroxyethyl)methacrylamide, N-(2-hydroxypropyl)acrylamide, N-(2-hydroxypropyl)methacrylamide, N-(1-hydroxypropyl)acrylamide, N-(1-hydroxypropyl)methacrylamide, N-(3-hydroxypropyl)acrylamide, N-(3-hydroxypropyl)methacrylamide, N-(2-hydroxybutyl)acrylamide, N-(2-hydroxybutyl)methacrylamide, N-(3-hydroxybutyl)acrylamide, N-(3-hydroxybutyl)methacrylamide, N-(4-hydroxybutyl)acrylamide, N-(4-hydroxybutyl)methacrylamide and N-methyl-N-2-hydroxyethyl(meth)acrylamide.

Additionally, examples of the (a2) other than the N-vinyl cyclic amides and the (meth)acrylamides include: amino group-containing monomers such as aminoethyl (meth)acrylate, N,N-dimethylaminoethyl (meth)acrylate and N, N-diaminopropylmethyl (meth)acrylate; maleimide skeleton-containing monomers such as N-cyclohexyl maleimide and N-phenyl maleimide; itaconimide monomers such as N-methylitaconimide, N-ethylitaconimide, N-butylitaconimide, N-2-ethylhexylitaconimide, N-laurylitaconimide and N-cyclohexylitaconimide; cyanoacrylate monomers such as acrylonitrile and methacrylonitrile; and succinimide monomers such as N-(meth)acryloyloxymethylene succinimide, N-(meth) acryloyl-6-oxyhexamethylene succinimide and N-(meth)acryloyl-8-oxyoctamethylene succinimide.

From the viewpoint of the easiness in establishing a balance between the adhesion reliability and the flexibility in the pressure-sensitive adhesive layer formed of the pressure-sensitive adhesive composition, the following are preferable as the (a2): N-vinyl-2-pyrrolidone and N-vinyl-2-caprolactam; (meth)acrylamides having one or two N-alkyl groups having 1 to 4 (preferably 1 or 2) carbon atoms (for example, N,N-dialkylacrylamides such as N,N-diethylacrylamide and N,N-dimethylacrylamide); and N-(2-hydroxyethyl)acrylamide, N-(2-hydroxyethyl)methacrylamide, N-methylol(meth)acrylamide and N-(3-hydroxypropyl)acrylamide. In particular, the following are preferable as the (a2): N,N-dimethylacrylamide, N-vinyl-2-pyrrolidone, N-vinyl-2-caprolactam; and the following are most preferable as the (a2): N-vinyl-2-pyrrolidone and N-vinyl-2-caprolactam.

In the monomer mixture, the content of the (a2) in the total amount (100% by weight) of the (a1), (a2) and (a3) is not particularly limited, but is preferably 5 to 40% by weight, more preferably 7 to 35% by weight and furthermore preferably 10 to 30% by weight. When the content is less than 5% by weight, there sometimes occurs a failure such that in the pressure-sensitive adhesive layer formed of the pressure-sensitive adhesive composition and the pressure-sensitive adhesive sheet having the pressure-sensitive adhesive layer, the workability is degraded, the adhesion reliability is hardly exhibited and or disadvantages occur. On the other hand, when the content of (a2) exceeds 40% by weight, there sometimes occurs a failure such that in the pressure-sensitive adhesive layer formed of the pressure-sensitive adhesive composition and the pressure-sensitive adhesive sheet having the pressure-sensitive adhesive layer, the flexibility is degraded, the tackiness is degraded or other disadvantages occur. The degradation of the flexibility possibly leads to the degradation of the adhesion reliability (in particular, the repulsion resistance).

The (a3) is a monomer giving a glass transition temperature of 0°C or higher when polymerized into a homopolymer and having an ethylenically unsaturated bond in the molecule thereof. In the (a3), the (a2) is not included. The (a3) has an ethylenically unsaturated bond in the molecule thereof, and hence is a monofunctional monomer. In the monomer mixture, the (a3) monomers may be included each alone or in combinations of two or more thereof.

In the monomer mixture, examples of the (a3) include the monomers listed in Table 2 presented below. In the monomer mixture, the (a3) monomers may be included each alone or in combinations of two or more thereof.
[Table 2]

TABLE 2

| (a3) | Glass transition temperature when polymerized into homopolymer [°C] |
|---|---|
| tert-Butyl acrylate | 43 |
| tert-Butyl methacrylate | 118 |
| Cyclohexyl acrylate | 19 |
| Cyclohexyl methacrylate | 83 |
| Isobornyl acrylate | 94 |
| Isobornyl methacrylate | 110 |
| Furfuryl acrylate | 48 |
| Dicyclopentanyl acrylate | 120 |
| 1,4-Cyclohexanedimethanol mononacrylate | 9.8 |
| Dicyclopentenyloxyethyl acrylate | 10-15 |

Above all, the (a3) is more preferably a monomer (exclusive of the (a2)) giving a glass transition temperature of 10°C or higher when polymerized into a polymer and having an ethylenically unsaturated bond in the molecule thereof, and furthermore preferably a monomer (exclusive of the (a2)) giving a glass transition temperature of 15°C or higher when polymerized into a polymer and having an ethylenically unsaturated bond in the molecule thereof.

The (a3) is also preferably "a (meth)acrylate monomer which gives a glass transition temperature of 0°C or higher when polymerized into a homopolymer and has a structure in which a (meth)acryloyloxy group and a tertiary carbon atom are bonded to each other, or a (meth)acrylate monomer which gives a glass transition temperature of 0°C or higher when polymerized into a homopolymer and has a structure in which a (meth)acryloyloxy group and a carbon atom forming a ring of a monocyclic or polycyclic alicyclic hydrocarbon are bonded to each other, because these monomers each have no structure (for example, an acidic group) in the molecule thereof causing an interaction with an adherend and regulates the elasticity and the flexibility of the pressure-sensitive adhesive layer formed of the pressure-sensitive adhesive composition.

Specifically, as the (a3), tert-butyl acrylate, tert-butyl methacrylate, cyclohexyl acrylate, cyclohexyl methacrylate, isobornyl acrylate, isobornyl methacrylate, dicyclopentanyl acrylate, furfuryl acrylate and 1,4-cyclohexanedimethanol monoacrylate are preferable; and as the (a3), tert-butyl acrylate, cyclohexyl acrylate, isobornyl acrylate, dicyclopentanyl acrylate and 1,4-cyclohexanedimethanol monoacrylate are more preferable from the viewpoint of polymerizability. Additionally, isobornyl acrylate, isobornyl methacrylate and dicyclopentanyl acrylate are particularly preferable because these monomers lead to high Tg values.

In the monomer mixture, the content of (a3) in the total amount (100% by weight) of the (a1), (a2) and (a3) is not particularly limited, but is preferably 5 to 40% by weight, more preferably 7 to 30% by weight and furthermore preferably 10 to 20% by weight. When the content is less than 5% by weight, there sometimes occurs a failure such that in the pressure-sensitive adhesive layer formed of the pressure-sensitive adhesive composition and the pressure-sensitive adhesive sheet having the pressure-sensitive adhesive layer, the adhesive force to the adherend is degraded and other disadvantage occur. On the other hand, when the content of (a3) exceeds 40% by weight, there sometimes occurs a failure such that in the pressure-sensitive adhesive layer formed of the pressure-sensitive adhesive composition and the pressure-sensitive adhesive sheet having the pressure-sensitive adhesive layer, the flexibility is degraded, the tackiness is degraded or other disadvantages occur. The degradation of the flexibility possibly leads to the degradation of the adhesion reliability (in particular, repulsion resistance).

The monomer mixture may include a copolymerizable monomer (a4) together with the (a1), (a2) and (a3). The (a4) does not include the (a1), (a2) and (3), and the below described multifunctional monomer. The (a4) is a monofunctional monomer having an ethylenically unsaturated bond in the molecule thereof. In the monomer mixture, the (a4) monomers may be included each alone or in combinations of two or more thereof. The content of the (a4) in the monomer mixture is not particularly limited, but is preferably selected within a range not impairing the advantageous effects of the present invention.

For the purpose of allowing, in the pressure-sensitive adhesive layer of the present invention, the initial adhesive force and the adhesion reliability (in particular, repulsion resistance) at the time of attachment and the strippability and the dismantlability at the time of stripping from the adherend to be exhibited at high levels, the contents of the (a1), (a2) and (a3), in the total amount (100% by weight) of the (a1), (a2) and (a3), are preferably 50 to 80% by weight, 5 to 40% by weight and 5 to 40% by weight, respectively.

The partially polymerized substance of the monomer mixture means a composition in which one or two or more monomer components included in the monomer mixture are partially polymerized. The partially polymerized substance of the monomer mixture is, in some cases, viscous and syrupy depending on the polymerization percentage thereof.

The partially polymerized substance of the monomer mixture is obtained by polymerizing part of the monomer components included in the monomer mixture. For example, the partially polymerized substance of the monomer mixture is obtained by irradiating the monomer mixture with an active energy ray (in particular, ultraviolet ray) while the contact of the monomer mixture with oxygen is being avoided.

The polymerization percentage of the partially polymerized substance of the monomer mixture is not particularly limited, but is preferably 2 to 40% by weight and more preferably 5 to 20% by weight, for the purpose of allowing the pressure-sensitive adhesive composition to have a viscosity appropriate for handling or coating.

The polymerization percentage of the partially polymerized substance is determined as follows. A sample is prepared by sampling a fraction of the partially polymerized substance. The sample is weighed precisely to determine the weight thereof, which is defined as "the weight of the partially polymerized substance before drying." Next, the sample is dried at 130°C for 2 hours, and the sample after drying is weighed precisely to determine the weight thereof, which is defined as "the weight of the partially polymerized substance after drying." Then, from "the weight of the partially polymerized substance before drying" and "the weight of the partially polymerized substance after drying," the weight decrement of the sample caused by the drying at 130°C for 2 hours is derived and defined as "the weight decrement" (volatile matter content, weight of unreacted monomers).

From the obtained "weight of the partially polymerized substance before drying" and "weight decrement," the polymerization percentage (% by weight) of the partially polymerized substance is determined with the following formula:

$$\text{polymerization percentage (\% by weight) of partially polymerized substance} = [1 - (\text{weight decrement})/(\text{weight of partially polymerized substance before drying})] \times 100$$

As described above, the pressure-sensitive adhesive body may include a pressure-sensitive adhesive layer and a support, and the support may contain the coloring matter component. A possible embodiment of the aforementioned case is a case where pressure-sensitive adhesive layer has, for example, a configuration, as viewed from the interface with the adherend, of pressure-sensitive adhesive layer/support or a configuration of pressure-sensitive adhesive layer/support/pressure-sensitive adhesive layer. In these cases, it is conceivable that the support contains the coloring matter component, and consequently the support generates heat to expand the heat-expandable fine particles to results in stripping.

The support is not particularly limited, and the same material as the base material can be used as the support; however, from the viewpoint of the workability and the handleability, the support is preferably made of polyethylene terephthalate or the like.

The pressure-sensitive adhesive layer of the present invention contains at least heat-expandable fine particles. The heat-expandable fine particle means a fine particle the volume of which is thermally expanded. The pressure-sensitive adhesive composition may contain the heat-expandable fine particles of a single type or a combination of two or more types.

The heat-expandable fine particle is not particularly limited, but is preferably a microencapsulated heat-expandable fine particle. Examples of such a microencapsulated heat-expandable fine particle include microspheres (sometimes referred to as "heat-expandable microspheres") prepared by encapsulating substances easily gasified and expanding by heating such as isobutane, propane and pentane in elastic shells.

The shells of the heat-expandable microspheres are preferably formed of a thermoplastic substance, a heat-melt substance or a substance to burst by thermal expansion. Examples of the substances to form the shells of the heat-expandable microspheres include vinylidene chloride-acrylonitrile copolymer, polyvinyl alcohol, polyvinyl butyral, polymethylmethacrylate, polyacrylonitrile, vinylidene chloride and polysulfone. The heat-expandable microspheres are produced by conventional methods such as a coacervation method and an interface polymerization method.

As the heat-expandable microspheres, commercially available products may be used. Examples of the commercially available products of the heat-expandable microspheres include: "Matsumoto Microsphere F-30," "Matsumoto Microsphere F-50," "Matsumoto Microsphere F-80S" and "Matsumoto Microsphere F-85" (trade names, manufactured

by Matsumoto Yush-i-Seiyaku Co., Ltd.); and "Expancel Du Series" (trade name, manufactured by Expancel, Inc.). Among these, "Expancel 051 Du 40" (trade name, manufactured by Expancel, Inc.) and "Matsumoto Microsphere F-80SD" (trade name, manufactured by Matsumoto Yushi-Seiyaku Co., Ltd.) are more preferable.

The average particle size of the heat-expandable fine particle is not particularly limited, but is preferably 1 to 80 μm and more preferably 3 to 50 μm from the viewpoint of the dispersibility and the thin layer formability.

From the viewpoint of efficiently causing the degradation of the adhesive force in the pressure-sensitive adhesive layer, the heat-expandable fine particle preferably has a strength such that no bursting occurs until the volume expansion ratio is five or more, in particular, ten or more. When a heat-expandable particle bursting at a low volume expansion ratio (for example, a heat-expandable particle bursting at a volume expansion ratio increased by a factor of less than five) or a non-microencapsulated thermal expansion agent (heat-foaming agent) is used, the contact area between the pressure-sensitive adhesive layer and the adherend cannot be sufficiently reduced, and thus a good strippability is hardly obtained. The volume expansion ratio is derived with the following formula:

volume expansion ratio = (volume of heat-expandable microsphere after heating)/(volume of heat-expandable microsphere before heating)

Additionally, the pressure-sensitive adhesive layer preferably includes a heat-expandable fine particle and an acrylic polymer, and a polymerization initiator such as a thermal polymerization initiator or a photopolymerization initiator, if necessary, in addition to the coloring matter component. When the pressure-sensitive adhesive layer includes a polymerization initiator, a curing reaction based on heat or an active energy ray can be utilized at the time of forming the pressure-sensitive adhesive layer, and hence the pressure-sensitive adhesive layer can be obtained by curing the pressure-sensitive adhesive composition in the form of including the heat-expandable fine particle being mixed therein. In other words, it is possible to easily obtain the pressure-sensitive adhesive layer having a structure in which the heat-expandable fine particle is stably included. In particular, the pressure-sensitive adhesive layer preferably includes a photopolymerization initiator as described below, and hence by utilizing a polymerization reaction (photocuring reaction) using an active energy ray, it is possible to easily obtain the pressure-sensitive adhesive layer having a structure in which the heat-expandable fine particle is stably included. The polymerization initiators may be included each alone or in combinations of two or more thereof.

In particular, because the curing time at the time of forming the pressure-sensitive adhesive layer can be reduced, the polymerization initiator is preferably a photopolymerization initiator. Examples of the active energy ray used for irradiation when the curing reaction based on an active energy ray is used include: ionizing radiation such as α-ray, β-ray, γ-ray, neutron ray or electron beam; and ultraviolet ray; among these, ultraviolet ray is preferable. The irradiation energy, the irradiation time and the like of the active energy ray are not particularly limited, but are appropriately selected within a range not inhibiting the polymerization reaction.

The photopolymerization initiator is not particularly limited; however, examples of the photopolymerization initiator include: benzoin ether-based photopolymerization initiators, acetophenone-based photopolymerization initiators, α-ketol-based photopolymerization initiators, aromatic sulfonyl chloride-based photopolymerization initiators, optically active oxime-based photopolymerization initiators, benzoin-based photopolymerization initiators, benzil-based photopolymerization initiators, benzophenone-based photopolymerization initiators, ketal-based photopolymerization initiators and thioxanthone-based photopolymerization initiators.

Specifically, examples of the ketal-based photopolymerization initiators include 2,2-dimethoxy-1,2-diphenylethan-1-one (trade name: "Irgacure 651," manufactured by BASF Japan Ltd.). Examples of the α-hydroxyketone-based photopolymerization initiators include 1-hydroxy-cyclohexyl-phenylketone (trade name: "Irgacure 184," manufactured by BASF Japan Ltd.), 2-hydroxy-2-methyl-1-phenyl-propan-1-one (trade name: "Dalocure 1173," manufactured by BASF Japan Ltd.) and 1-[4-(2-hydroxyethoxy)-phenyl]-2-hydroxy-2-methyl-1-propan-1-one (trade name: "Irgacure 2959," manufactured by BASF Japan Ltd.). Examples of the α-aminoketone photopolymerization initiators include 2-ethyl-1-[4-(methylthiophenyl]-2-morpholinopropan-1-one (trade name: "Irgacure 907," manufactured by BASE Japan Ltd.) and 2-benzyl-2-dimethylamino-1-(4-morpholinophenyl)-butanone-1 (trade name: "Irgacure 369," manufactured by BASF Japan Ltd.). Examples of the acylphosphine oxide-based photopolymerization initiators include 2, 4, 6-trimethylbenzoyl diphenylphosphine oxide (trade name: "Lucilin TPO," manufactured by BASF Japan Ltd.). Examples of the benzoin ether-based photopolymerization initiators include benzoin methyl ether, benzoin ethyl ether, benzoin propyl ether, benzoin isopriopyl ether, benzoin isobutyl ether, 2,2-dimethoxy-1,2-diphenylethan-1-one and anisole methyl ether. Examples of the acetophenone-based photopolymerization initiators include 2,2-diethoxyacetophenone, 2,2-dimethoxy-2-phenylacetophenone, 1-hydroxycyclohexyl phenyl ketone, 4-phenoxydichloroacetophenone and 4-t-butyl-dichloroacetophenone. Examples of the aromatic sulfonyl chloride-based photopolymerization initiators include 2-naphthalenesulfonyl chloride. Examples of the optically active oxime-based photopolymerization initiators include 1-phenyl-1,1-propanedione-2-(o-ethoxycarbonyl)-oxime. Examples of the benzoin-based photopolymerization initiators include benzoin. Examples of the benzil-based photopolymerization initiators include benzil. Examples of the benzophenone-based photopolymerization initiators include benzophenone, benzoylbenzoic acid, 3,3'-dimethyl-4-methoxybenzophenone, polyvinyl benzophenone and $\alpha$-hydroxycyclohexyl phenyl ketone. Examples of the ketal-based photopolymerization initiators include benzil dimethyl ketal. Examples of the thioxanthone-based photopolymerization initiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone and docedylthioxanthone.

The content of the polymerization initiator in the pressure-sensitive adhesive layer is different depending on the type of the polymerization initiator and is not particularly limited, but in the case of the photopolymerization initiator, the content concerned is preferably 0.001 to 5 parts by weight, more preferably 0.01 to 5 parts by weight and furthermore preferably 0.05 to 3 parts by weight in relation to 100 parts by weight of the monomer mixture. When the content of the photopolymerization initiator is less than 0.001 part by weight, the time required for the polymerization reaction sometimes becomes long; on the other hand, when the content concerned exceeds 5 parts by weight, the decrease of the molecular weight of the base polymer possibly occurs to cause a variation of the adhesion property.

Additionally, the pressure-sensitive adhesive layer preferably includes a monomer having two or more ethylenically unsaturated bonds in the molecule thereof, for the purpose of regulating the elasticity or the flexibility of the pressure-sensitive adhesive layer formed of the pressure-sensitive adhesive composition or improving the adhesive force of the pressure-sensitive adhesive layer by increasing the cohesive force of the pressure-sensitive adhesive layer. Also, from the viewpoint of the foamability of the pressure-sensitive adhesive layer formed of the pressure-sensitive adhesive composition, the pressure-sensitive adhesive layer preferably includes a monomer having two or more ethylenically unsaturated bonds in the molecule thereof. In the present application, "the monomer having two or more ethylenically unsaturated bonds in the molecule thereof" is sometimes referred to as "the multifunctional monomer."

In the multifunctional monomer, the (a2) and the (a3) are not included.

The multifunctional monomer is preferably a monomer having two or more ethylenically unsaturated bonds in the molecule thereof wherein at least one ethylenically unsaturated bond is the ethylenically unsaturated bond in a (meth) acryloyl group. In the present application, "a monomer having two or more ethylenically unsaturated bonds in the molecule thereof wherein at least one ethylenically unsaturated bond is the ethylenically unsaturated bond in a (meth)acryloyl group" is sometimes referred to as "a multifunctional (meth)acrylate." In the multifunctional (meth)acrylate, all the ethylenically unsaturated bonds in the molecule thereof may be ethylenically unsaturated bonds in the (meth)acryloyl groups.

Examples of the multifunctional (meth)acrylate include trimethylolpropane tri(meth)acrylate, tetramethylolmethane tetra(meth)acrylate, pentaerythritol di(meth)acrylate, pentaerythritol tri(meth)acrylate, pentaerythritol tetra(meth) acrylate, 1,2-ethylene glycol di(meth)acrylate, 1,4-butylene glycol di(meth)acrylate, 1,6-hexanediol di(meth)acrylate, 1,12-dodecanediol di(meth)acrylate, dipentaerythritol monohydroxypenta(meth)acrylate, dipentaerythritol hexa(meth) acrylate, polyethylene glycol di(meth)acrylate, hexanediol di(meth)acrylate, (poly)ethylene glycol di(meth)acrylate, (poly) propylene glycol di(meth)acrylate, neopentylglycol di(meth)acrylate, tetramethylolmethane tri(meth)acrylate, allyl (meth) acrylate, vinyl (meth)acrylate, epoxy acrylate, polyester acrylate, urethane acrylate, and reactive hyperbranched polymers having a plurality of (meth)acryloyl groups at the terminals (for example, trade names: "CN2300," "CN2301" and "CN2320," manufactured by Sartomer Company, Inc.).

The content of the multifunctional monomer in the pressure-sensitive adhesive layer is not particularly limited. Specifically, the multifunctional (meth)acrylate is included in the pressure-sensitive adhesive layer, the content of the multifunctional (meth)acrylate is preferably 5 parts by weight or less (for example, 0.001 to 5 parts by weight), more preferably 3 parts by weight or less (for example, 0.001 to 3 parts by weight), and furthermore preferably 1 part by weight or less (for example, 0.001 to 1 part by weight) in relation to 100 parts by weight of the monomer mixture. When the content of the multifunctional (meth)acrylate is too large (for example, exceeds 5 parts by weight), the flexibility of the pressure-sensitive adhesive layer is possibly impaired, and in particular, the repulsion resistance of the pressure-sensitive adhesive layer is possibly adversely affected. When the content of the multifunctional (meth)acrylate is too small, a sufficient cohesive force is possibly not obtained and the adhesion reliability of the pressure-sensitive adhesive layer is possibly adversely affected.

In the pressure-sensitive adhesive layer, the multifunctional monomer (in particular, the multifunctional (meth) acrylate) is preferably included in an appropriately regulated manner in such a way that the solvent-insoluble fraction (the gel fraction) of the pressure-sensitive adhesive layer is the intended solvent-insoluble fraction.

Moreover, the pressure-sensitive adhesive layer may include additives, if necessary, within a range not impairing the advantageous effects of the present invention. Examples of such additives include: cross-linking agents such as an isocyanate-based cross-linking agent and an epoxy-based cross-linking agent; tackifiers such as rosin derivative resin, polyterpene resin, petroleum resin and oil-soluble phenol resin; a plasticizer; a filler; an antiaging agent; and a surfactant. Two or more of these additives may be included in the pressure-sensitive adhesive layer.

The pressure-sensitive adhesive composition for forming the pressure-sensitive adhesive layer may be regulated so as to have a viscosity (usually, 0.3 to 40 Pa·s as measured with a B-type viscometer under the condition of a measurement temperature of 25°C) appropriate for coating from the viewpoint of the handleability of the pressure-sensitive adhesive composition.

For the purpose of obtaining the foregoing viscosity, the pressure-sensitive adhesive composition for forming pressure-sensitive adhesive layer preferably includes the partially polymerized substance of the monomer mixture. A polymer for thickening may also be mixed in the pressure-sensitive adhesive composition.

The method for producing the pressure-sensitive adhesive composition for forming the pressure-sensitive adhesive layer is not particularly limited; however, examples of the foregoing method include a method in which in the monomer mixture or the partially polymerized substance of the monomer mixture, the components such as a heat-expandable fine particle and a coloring matter component and the components (such as the photopolymerization initiator, a multifunctional monomer such as the multifunctional (meth)acrylate and additives) to be added if necessary are mixed.

The pressure-sensitive adhesive composition for forming the pressure-sensitive adhesive layer includes the monomer mixture including the (a2) as the monomer component or the partially polymerized substance of the monomer mixture, and hence can form a pressure-sensitive adhesive layer which maintains a high initial adhesive force and a high adhesion reliability (in particular, repulsion resistance) at the time of attachment, and is easily stripped at the time of being stripped from the adherend, so as to allow the joint portion to be easily separated and dismantled. The pressure-sensitive adhesive composition can form a pressure-sensitive adhesive layer excellent in adhesion property. The (a2) is used to contribute to the improvement of the adhesive force or the cohesive force of the pressure-sensitive adhesive layer.

Accordingly, even when the pressure-sensitive adhesive composition for forming the pressure-sensitive adhesive layer does not substantially include as a monomer copolymerizable with the (a1) an acidic group-containing monomer (a monomer such as a carboxyl group-containing monomer such as acrylic acid; a monomer containing an acidic group (such as a sulfonic acid group or a phosphoric acid group) other than a carboxyl group such as a sulfonic acid group-containing monomer or a phosphoric acid group-containing monomer, the pressure-sensitive adhesive composition can form a pressure-sensitive adhesive layer which exhibits a good adhesive force and can be easily stripped from the adherend by heating. The foregoing phrase "does not substantially include a monomer" means that the monomer mixture absolutely does not include the monomer, or the content of the monomer is 0.1 part by weight or less in relation to 100 parts by weight of the total amount of the monomer components.

The pressure-sensitive adhesive composition for forming the pressure-sensitive adhesive layer includes a monomer mixture including as a monomer component a monomer (a2) having in the molecule thereof at least a nitrogen atom and an ethylenically unsaturated bond or the partially polymerized substance of the monomer, and hence can form a pressure-sensitive adhesive layer having an adhesive force to the adherend (in particular, a metal adherend) hardly being increased with the passage of time. Moreover, the pressure-sensitive adhesive composition for forming the pressure-sensitive adhesive layer can form a pressure-sensitive adhesive layer hardly causing the corrosion of the adherend (in particular, a metal adherend). This is because the (a2) does not have in the molecule thereof a structure (for example, the aforementioned acidic group) causing an interaction with the adherend. The phrase metal adherend means an adherend formed by using a metal as a material for forming the adherend.

When a pressure-sensitive adhesive layer formed of a pressure-sensitive adhesive composition substantially including an acidic group-containing monomer is attached to a metal adherend, the interaction (such as the hydrogen bonding between the acid component and the metal) with the adherend increases the adhesive force with the passage of time and the stripping from the adherend and the separation and dismantlement of the joint portion sometimes become difficult. Additionally, the metal adherend sometimes undergoes corrosion due to the acid component.

The inclusion of the monomer mixture including the (a3) in addition to the (a2), or the partially polymerized substance of the monomer mixture in tube pressure-sensitive adhesive composition for forming the pressure-sensitive adhesive layer enables the formation of a pressure-sensitive adhesive layer which more hardly causes the increase of the adhesive force with the passage of time.

The pressure-sensitive adhesive composition for forming the pressure-sensitive adhesive layer can form a pressure-sensitive adhesive layer which maintains a high initial adhesive force and a high adhesion reliability (in particular, repulsion resistance) at the time of attachment, and is easily stripped at the time of stripping the pressure-sensitive adhesive layer from the adherend, so as to allow the joint portion to be easily separated and dismantled; this is also based on the inclusion, in the pressure-sensitive adhesive composition, of the monomer mixture including the (a3) as a monomer component together with the (a2) or the partially polymerized substance of the monomer mixture. This is because the (a3) is a component to enhance the effect of the (a2).

The pressure-sensitive adhesive composition for forming the pressure-sensitive adhesive layer includes a heat-expandable fine particle, and hence when the pressure-sensitive adhesive layer is attached to an adherend, and then heated, the reduction of the contact area between the pressure-sensitive adhesive layer and the adherend is caused by the foaming due to heating of the heat-expandable fine particle, and (i) a property (strippability, easy strippability) of

easily degrading adhesive force and (ii) the dismantlability (separability) of the joint portion are exhibited. In other words, the pressure-sensitive adhesive composition for forming the pressure-sensitive adhesive layer can form a pressure-sensitive adhesive layer which can be easily stripped and dismantled by heating at the time of stripping. In the present application, the properties of (i) and (ii) are sometimes collectively referred to as the "strippability/dismantlability."

When the pressure-sensitive adhesive composition for forming the pressure-sensitive adhesive layer includes a monomer mixture including, instead of the (a1), an alkyl (meth)acrylate monomer having an alkyl group having 4 to 12 carbon atoms and giving a glass transition temperature exceeding 0°C when polymerized into a homopolymer, or a partially polymerized substance of the monomer mixture, the initial adhesive force and the adhesion reliability of the pressure-sensitive adhesive layer formed of the pressure-sensitive adhesive composition are degraded, and cannot establish the compatibility with the strippability/dismantlability.

When the pressure-sensitive adhesive composition for forming the pressure-sensitive adhesive layer includes a monomer mixture including, instead of the (a1), an alkyl (meth)acrylate monomer having an alkyl group having 1 to 3 carbon atoms and giving a glass transition temperature exceeding 0°C when polymerized into a homopolymer or an alkyl (meth)acrylate monomer having an alkyl group having more than 12 carbon atoms and giving a glass transition temperature exceeding 0°C when polymerized into a homopolymer, or an partially polymerized substance of the monomer mixture, the initial adhesive force and the adhesion reliability of the pressure-sensitive adhesive layer formed of the pressure-sensitive adhesive composition are degraded, and cannot establish the compatibility with the strippability/dismantlability.

The solvent-insoluble fraction (gel fraction) of the pressure-sensitive adhesive layer is not particularly limited, but is preferably 50 to 99% by weight and more preferably 60 to 95% by weight. When the solvent-insoluble fraction is less than 50% by weight, the stripping of the pressure-sensitive adhesive body from the adherend, due to the foaming of the heat-expandable fine particles is sometimes difficult. When the solvent-insoluble fraction is more than 99% by weight, the wettability of the pressure-sensitive adhesive layer is degraded and the adhesion is sometimes difficult.

The solvent-insoluble fraction of the pressure-sensitive adhesive layer means "the proportion of the solvent-insoluble component," and is a value derived by the following "measurement method of the solvent-insoluble fraction in the pressure-sensitive adhesive layer." The solvent-insoluble fraction of the pressure-sensitive adhesive layer includes the solvent-insoluble heat-expandable fine particle.

(Measurement Method of Solvent-Insoluble Fraction in Pressure-Sensitive Adhesive Layer)

About 1 g of the pressure-sensitive adhesive layer is sampled, and the sampled fraction of the pressure-sensitive adhesive layer is used as a sample. The sample is weighed precisely to determine the weight thereof, which is defined as "the weight of the pressure-sensitive adhesive layer before immersion." Next, the sample is immersed in 40 g of ethyl acetate for 7 days, then all the component insoluble (insoluble fraction) in ethyl acetate are collected, the whole collected insoluble fraction is dried at 130°C for 2 hours, and the weight of the dried insoluble fraction is determined and defined as "the dry weight of the insoluble fraction." If Then, the obtained numerical values are substituted into the following formula to derive the insoluble fraction:

solvent-insoluble fraction (% by weight) of pressure-sensitive adhesive layer = [(dry weight of insoluble fraction)/(weight of pressure-sensitive adhesive layer before immersion)] × 100

The thickness of the pressure-sensitive adhesive layer is appropriately selected according to the factors such as the intended use and the decrease of the adhesive force by heating; however, for the purpose of maintaining the smoothness of the surface of the pressure-sensitive adhesive layer, when the heat-expandable fine particle (in particular, the heat-expandable microsphere) is included, the thickness of the pressure-sensitive adhesive layer is preferably set at the maximum particle size of the heat-expandable fine particle or more. For the purpose of obtaining good strippability/dismantlability in the pressure-sensitive adhesive layer, the large thickness of the pressure-sensitive adhesive layer of the present invention is preferable because the absolute amount of the heat-expandable fine particles in the pressure-sensitive adhesive layer is increased with the increase of the thickness of the pressure-sensitive adhesive layer. However, when the thickness of the pressure-sensitive adhesive layer of the present invention is increased, the absolute amount of the heat-expandable fine particles in the pressure-sensitive adhesive layer is increased, consequently the proportion of the adhesive component in the pressure-sensitive adhesive layer is decreased, and hence the adhesive force or the

adhesion reliability in the pressure-sensitive adhesive layer is possibly degraded.

Accordingly, the thickness of the pressure-sensitive adhesive layer is not particularly limited, but is preferably 1 to 300 μm, more preferably 10 to 250 μm and furthermore preferably 30 to 200 μm, for the purpose of establishing the compatibility between the adhesion reliability and the strippability/dismantlability in the pressure-sensitive adhesive layer. The pressure-sensitive adhesive layer of the present invention may have a single-layered structure or a laminated structure.

More specifically, the pressure-sensitive adhesive layer is formed by applying a pressure-sensitive adhesive composition to an appropriate support such as a release film or a base material to obtain a pressure-sensitive adhesive composition layer, and by subsequently drying or curing (for example, curing with heat or an active energy ray) the pressure-sensitive adhesive composition layer, if necessary. When the curing (photocuring) with an active energy ray is utilized, because the photopolymerization reaction is inhibited by the oxygen in the air, it is preferable to block the oxygen, for example, by laminating a release film (separator), or by photocuring in a nitrogen atmosphere.

In particular, the pressure-sensitive adhesive layer is preferably formed of a pressure-sensitive adhesive composition including a polymerization initiator (a polymerization initiator such as a photopolymerization initiator or a thermal polymerization initiator) by utilizing heat or an active energy ray, from the viewpoint of obtaining the pressure-sensitive adhesive layer in which the heat-expandable fine particle is stably included. The pressure-sensitive adhesive layer of the present invention is preferably formed of the pressure-sensitive adhesive composition including a photopolymerization initiator by utilizing the curing reaction based on an active energy ray (not particularly limited, but ultraviolet ray is preferable), from the viewpoint of obtaining a thick pressure-sensitive adhesive layer.

The pressure-sensitive adhesive layer has a property of easily decreasing the adhesive force (easy strippability) by including heat-expandable fine particles and due to the foaming of the heat-expandable fine particles by heating.

For adherends of various materials, the pressure-sensitive adhesive layer maintains a high initial adhesive force and a high adhesion reliability (in particular, repulsion resistance) at the time of attachment, and exhibits good strippability/dismantlability by heating at the time of stripping. The pressure-sensitive adhesive layer is also excellent in adhesion property.

In particular, also for metal adherends, the pressure-sensitive adhesive layer maintains a high initial adhesive force and a high adhesion reliability (in particular, repulsion resistance) at the time of attachment, and exhibits good strippability/dismantlability by heating at the time of stripping. Also for metal adherends, the pressure-sensitive adhesive layer is excellent in adhesion property.

<Pressure-Sensitive Adhesive Sheet>

A pressure-sensitive adhesive sheet having at least the pressure-sensitive adhesive layer maintains a high initial adhesive force and a high adhesion reliability (in particular, repulsion resistance) at the time of attachment, and is easily stripped at the time of being stripped from the adherend, so as to allow the joint portion to be easily separated and dismantled; thus, the pressure-sensitive adhesive sheet enables efficient stripping even when the adherend is not a special one. When the pressure-sensitive adhesive layer include the acrylic polymer, the pressure-sensitive adhesive layer maintains a high initial adhesive force and a high adhesion reliability (in particular, repulsion resistance) at the time of attachment to the adherend, and has a property of easily decreasing the adhesive force (adhesion strength) at the time of stripping, and achieves an effect of being excellent in adhesion property.

In particular, when the pressure-sensitive adhesive layer includes the acrylic polymer, the pressure-sensitive adhesive sheet has a high initial adhesive force also for a metal adherend, and has a property of easily decreasing the adhesive force at the time of stripping, due to the foaming of the heat-expandable fine particles by heating. Also for metal adherends, the pressure-sensitive adhesive layer is excellent in adhesion property.

The pressure-sensitive adhesive sheet is preferably a pressure-sensitive adhesive sheet intended to be re-released.

The form of the pressure-sensitive adhesive sheet is not particularly limited, but may be a form of being wound in a roll-like shape or a form in which sheets are laminated. In other words, the pressure-sensitive adhesive sheet is allowed to have a form such as a sheet shape or a tape shape.

A pressure-sensitive adhesive sheet wound in a roll-like shape may have a form in which the pressure-sensitive adhesive sheet is wound in a roll-like shape under the condition that the pressure-sensitive adhesive surface is protected with the below-described release film. Alternatively, when the pressure-sensitive adhesive sheet wound in a roll-like shape is the below-described type having a base material, the pressure-sensitive adhesive sheet wound in a roll-like shape may have a form in which the pressure-sensitive adhesive sheet is wound in a roll-like shape under the condition that the pressure-sensitive adhesive surface is protected with the release-treated layer (back-side treated layer) formed on one side of the base material. The release treatment agent (release agent) used when the release treated layer is formed on one side of the base material is not particularly limited; however, examples of the release treatment agent include a silicone-based release agent and a long-chain alkyl-based release agent.

The pressure-sensitive adhesive sheet may be a double-sided pressure-sensitive adhesive sheet in which both sides of the pressure-sensitive adhesive sheet are each a pressure-sensitive adhesive surface, or a single-sided pressure-sensitive adhesive sheet in which only one side of the pressure-sensitive adhesive sheet is a pressure-sensitive adhesive surface. The pressure-sensitive adhesive sheet is preferably a double-sided pressure-sensitive adhesive sheet from the viewpoint of mutually laminating two members.

The pressure-sensitive adhesive sheet may be a type having no base material (base material layer, base), namely, a so-called "base material-less-type" pressure-sensitive adhesive sheet (hereinafter, sometimes referred to as "the base material-less pressure-sensitive adhesive sheet") or a type having a base material, namely, a base material-including-type pressure-sensitive adhesive sheet (hereinafter, sometimes referred to as "the base material-including pressure-sensitive adhesive sheet"). Examples of the base material-less pressure-sensitive adhesive sheet include: a pressure-sensitive adhesive sheet composed only of a pressure-sensitive adhesive layer. Examples of the base material-including pressure-sensitive adhesive sheet include a pressure-sensitive adhesive sheet having a pressure-sensitive adhesive layer at least on one side of the base material.

The base material is not particularly limited; however, examples of the base material include: paper-based base material such as paper; fiber based-base materials such as cloth, non-woven fabric and nets; metal-based base materials such as metal foil and metal plate; plastic base materials such as films and sheets based on various resins (such as polycarbonate resins, olefin resins, polyester resins, polyvinyl chloride resins, vinyl acetate resins, amide resins, polyimide resins, polyether ether ketone (PEEK) and polyphenylene sulfide (PPS)); rubber-based base materials such as rubber sheet; foams such as foam sheet, and laminates of these (in particular, laminates of plastic base materials and other base materials, and laminates of plastic films (or sheets)). As the base material, for example, a fine particle-containing viscoelastic base material and a heat shrink film can also be used.

The use of the fine particle-containing viscoelastic base material as the base material provides an effect that a high normal-state adhesive force can be maintained at the time of attachment.

The fine particle-containing viscoelastic base material is a layer obtained by polymerizing a fine particle-containing polymerizable composition, and is not particularly limited as long as the fine particle-containing viscoelastic base material contains fine particles in the base material and the base material has viscoelastic properties. The base polymer in the fine particle-containing polymerizable composition is also not particularly limited as long as the formed fine particle-containing viscoelastic base material contains fine particles in the base material and the base material has viscoelastic properties.

When the fine particle-containing polymerizable composition is a pressure-sensitive adhesive composition that contains fine particles (a fine particle-containing pressure-sensitive adhesive composition), as the base polymer, the base polymers appropriately selected from the base polymers in the following pressure-sensitive adhesives can be used; for example, acrylic pressure-sensitive adhesives, rubber -based pressure-sensitive adhesives, vinyl alkyl ether-based pressure-sensitive adhesives, silicone-based pressure-sensitive adhesives, polyester-based pressure-sensitive adhesives, polyamide-based pressure-sensitive adhesives, urethane-based pressure-sensitive adhesives, fluorine-based pressure-sensitive adhesives and epoxy-based pressure-sensitive adhesives.

Examples of the fine particles contained in the fine particle-containing viscoelastic base materials include: particles of the metals such as steel, nickel, aluminum, chromium, iron and stainless steel, and particles of the oxides of these metals; particles of the carbides such as silicon carbide, boron carbide and nitrogen carbide; particles of the nitrides such as aluminum nitride, silicon nitride and boron nitride; particles of the ceramics typified by the oxides such as alumina and zirconium; inorganic fine particles of calcium carbide, aluminum hydroxide, glass and silica; natural material particles such as volcano shirasu and sand; and particles of the polymers such as polystyrene, polymethyl methacrylate, phenolic resin, benzoguanamine resin, urea resin, silicon resin, nylon, polyester, polyurethane, polyethylene, polypropylene, polyamide and polyimide.

As the fine particles contained in the fine particle-containing viscoelastic base material, inorganic fine hollow microspheres or organic fine hollow microspheres may also be used. Specific examples of the inorganic fine hollow microsphere include: hollow balloons made of glass such as a hollow glass balloon; hollow balloons made of metal oxides such as a hollow alumina balloon; and porcelain hollow balloons such as a hollow ceramic balloon. Examples of the organic fine hollow microsphere include: resin hollow balloons such as a hollow acrylic balloon and a hollow vinylidene chloride balloon.

As the fine particles contained in the fine particle-containing viscoelastic base material, a solid glass balloon may also be used.

In the fine particle-containing viscoelastic base material, air bubbles may also included. The form in which air bubbles are formed is not particularly limited; examples of such a form include the following:

(1) a form in which air bubbles are formed by forming the fine particle-containing viscoelastic base material by using a fine particle-containing pressure-sensitive adhesive composition (sometimes, referred to as "the air bubble-mixed fine particle-containing polymerizable composition") in which a gas component for forming air bubbles (sometimes,

referred to as "the air bubble forming gas") is beforehand mixed
(2) a form in which air bubbles are formed by forming a fine particle-containing viscoelastic base material by using a fine particle-containing adhesive composition which contains a foaming agent
In the present invention, in the fine particle-containing viscoelastic base material including the air bubbles mixed therein (sometimes, referred to as "the air bubble-mixed fine particle-containing viscoelastic base material"), the air bubbles are preferably formed in the foregoing form (1).

When a heat shrink film is used as the base material, the base material shrinks at the time of stripping by irradiation with laser light to provide an effect that the stripping can be more easily performed.

A heat shrink film is a film to shrink by heating at least along an arbitrary axis direction through utilizing the internal stress or the like based on the molecular orientation of a stretched film. In the present invention, it is preferable to use a heat shrink film in which the heat shrinkage rate in the principal shrinkage direction as evaluated by the following measurement method is 5% or more at any temperature between 70 and 180°C (for example, 80°C and 170°C). The heat shrinkage rate is more preferably 8% or more, furthermore preferably 10% or more and particularly preferably 20% or more (usually, 90% or less). When the heat shrinkage rate is 5% or more, preferably a force to strip the pressure-sensitive adhesive layer from the adherend is exerted to enable further efficient stripping. When the shrinkage rate is less than 5%, the deformation magnitude of the heat shrink film is small, and no efficient stropping can be sometimes performed.

(Measurement Method of Heat Shrinkage Rate)

A heat shrink film is cut to a square having an optional size (for example, 20 mm x 20 mm) to prepare a specimen. Next, the specimen is placed in a hot air dryer and heat treated at a predetermined temperature for 4 minutes. The sizes of the heat treated film specimen before and after the heat treatment are measured, and the shrinkage rate is derived with the following formula:

$$\text{shrinkage rate (\%)} = [(\text{size before shrinkage}) - (\text{size after shrinkage})/(\text{size before shrinkage})] \times 100$$

The heat shrink film usable in the pressure-sensitive adhesive sheet of the present invention is such that the heat shrink film shrinks at any temperature between 70 and 180°C; however, for the purpose of more efficiently stripping the pressure-sensitive adhesive sheet, the heat shrink film preferably shrinks at the below-described temperature at which the heat-expandable fine particle is expanded. Specifically, the pressure-sensitive adhesive sheet of the present invention is stripped due to the synergetic effect which occurs between the effect of the stripping from the adherend due to the deformation of the pressure-sensitive adhesive layer caused by the shrinkage of the heat shrink film, which is the base material, due to heating, and (ii) the effect of the degradation or the loss of the adhesive force due to the deformation into an irregular shape of the surface of the pressure-sensitive adhesive layer caused by the expansion deformation of the pressure-sensitive adhesive layer due to the expansion and/or the foaming of the heat-expandable fine particle. Accordingly, the shrinkage of the heat shrink film and the expansion of the heat-expandable microsphere preferably occur simultaneously; more specifically, at the expansion temperature (or foaming temperature) of the heat-expandable microsphere, the heat shrink film preferably shrinks by 5% or more and more preferably by 10% or more.

The thickness of the heat shrink film is not particularly limited, but is preferably 10 to 500 μm, more preferably 12 to 200 μm and furthermore preferably 15 to 100 μm. The heat shrink film may have a single-layered form or a multiple-layered form. The heat shrink film may be subjected to, if necessary, various treatment such as back side treatment, antistatic treatment and primer coating treatment.

Examples of the material constituting the heat shrink film of the present invention include: polyolefin resins such as polypropylene and polyethylene; polyester resins such as polybutylene terephthalate and polyethylene terephthalate; polynorbornene resin; polyimide resin; polyamide resin; polyurethane resin; polyvinyl chloride resin; polyvinylidene chloride resin; and polystyrene resin. In the present invention, in particular, it is preferable to use a heat shrink film made of polyester resin. The heat shrink film made of polyester resin has an advantage that the adhesive force (anchoring capability) to the pressure-sensitive adhesive layer is high and no primer coating treatment is needed.

As the heat shrink film, commercially available products may also be used. Usable examples of the commercially available shrink film include, without being particularly limited to: "Space Clean" (trade name, manufactured by Toyobo Co., Ltd.), "Fancy Wrap" (trade name, manufactured by Gunze Ltd.), "Torayfan" (trade name, manufactured by Toray Industries, Inc.), "Arton" (trade name, manufactured by JSR Corp.), "Zeonoa" (trade name, manufactured by Zeon Corp.) and "Suntec" (trade name, manufactured by Asahi Kasei Corp.).

The thickness of the base material is not particularly limited, but is preferably 10 to 3000 μm, more preferably 15 to 2000 μm and furthermore preferably 20 to 1000 μm. The base material may have a single-layered form or a multiple-layered form. The base material may be subjected to, if necessary, various treatment such as back side treatment, antistatic treatment and primer coating treatment.

The pressure-sensitive adhesive sheet may have other layers such as an intermediate layer, a primer layer and a pressure-sensitive adhesive layer other than the pressure-sensitive adhesive layer.

Examples of the pressure-sensitive adhesive layer other than the foregoing pressure-sensitive adhesive layer include: a heat-expandable fine particle-noncontaining pressure-sensitive adhesive layer which is a pressure-sensitive adhesive layer that does not contain the heat-expandable fine particle. The heat-expandable fine particle-not-containing pressure-sensitive adhesive layer is formed by utilizing a heretofore known method for forming a pressure-sensitive adhesive layer by using the heretofore known pressure-sensitive adhesives (such as an acrylic pressure-sensitive adhesive, a rubber-based pressure-sensitive adhesive, a vinyl alkyl ether-based pressure-sensitive adhesive, a silicone-based pressure-sensitive adhesive, a polyester-based pressure-sensitive adhesive, a polyamide-based pressure-sensitive adhesive, a urethane-based pressure-sensitive adhesive, a fluorine-based pressure-sensitive adhesive and an epoxy-based pressure-sensitive adhesive). The thickness of the heat-expandable fine particle-noncontaining pressure-sensitive adhesive layer is not particularly limited, and is appropriately selected according to the factors such as the intended use or the use method.

The pressure-sensitive adhesive sheet may be protected with a release film (separator) until the time of being used for the purpose of protecting the pressure-sensitive adhesive surface. When the pressure-sensitive adhesive sheet is prepared, a release film may be used. When the pressure-sensitive adhesive sheet is prepared, a release film is not necessarily required to be used; however, because the photopolymerization reaction is inhibited by the oxygen in the air, it is preferable to use a release film at the time of preparation of the pressure-sensitive adhesive sheet for the purpose of protecting the contact with the oxygen by coating the surface of the pressure-sensitive adhesive sheet with the release film. When the pressure-sensitive adhesive sheet is utilized, the release film is stripped.

The release film is not particularly limited; however, examples of the release film include, in addition to the base material at least one side of which is release treated (subjected to mold release treatment) with a release treatment agent (a mold release treatment agent), low adhesive base materials made of fluorine-based polymers (such as polytetrafluoroethylene, polychlorotrifluoroethylene, polyvinyl fluoride, polyvinylidene fluoride, tetrafluoroethylene-hexafluoropropylene copolymer and chlorofluoroethylene-vinylidene fluoride copolymer), and low adhesive base materials made of nonpolar polymers (such as olefin resins such as polyethylene and polypropylene). In a low adhesive base material, both sides thereof are utilized as release surface; on the other hand, in a release-treated base material, the release-treated surface is utilized as the release surface. The release film is formed with a heretofore known or conventional method.

Examples of the base material in the base material at least one side of which is release treated with the release treatment agent include: plastic base material films (synthetic resin films) such as: polyester films such as polyethylene terephthalate film; olefin resin films such as polyethylene film and polypropylene film; polyvinyl chloride film; polyimide film; polyamide films such as nylon film; and rayon film. Additional examples of the base material include paper-based base materials constituted with various types of paper such as high-quality paper, Japanese paper, craft paper, glassine paper, synthetic paper and top coat paper. Among these, polyester films such as polyethylene terephtalate film are preferable.

The release treatment agent in the base material at least one side of which is release-treated with the release treatment agent is not particularly limited; however, examples of such release treatment agent include a silicone-based release treatment agent, a fluorine-based release treatment agent and a long-chain alkyl-based release treatment agent. The release treatment agents are used each alone or in combinations of two or more thereof.

The thickness of the release film is not particularly limited. The release film may have a single-layered form or a laminated form.

The method for preparing the pressure-sensitive adhesive sheet is not particularly limited, and the pressure-sensitive adhesive sheet may be prepared by a heretofore known or conventional method. The base material-less-type pressure-sensitive adhesive sheet constituted only with the pressure-sensitive adhesive layer is formed, for example, as follows: the pressure-sensitive adhesive composition is applied to the release film to obtain a pressure-sensitive adhesive composition layer, and the resulting pressure-sensitive adhesive composition layer is cured to obtain the pressure-sensitive adhesive layer. The pressure-sensitive adhesive sheet with a base material constituted at least with the base material and the pressure-sensitive adhesive layer is formed, for example, as follows: the pressure-sensitive adhesive composition is applied at least to one side of the base material to obtain a pressure-sensitive adhesive composition layer, and the resulting pressure-sensitive adhesive composition layer is cured to obtain the pressure-sensitive adhesive layer. The pressure-sensitive adhesive sheet with a base material may also be formed by transferring the pressure-sensitive adhesive layer prepared separately onto at least one side of the base material.

The coating method and the application device used when a pressure-sensitive adhesive composition is applied

to the release film or the base material is not particularly limited; however, the below-described coating methods and the below-described application devices may also be used.

The method for curing the pressure-sensitive adhesive composition for forming the pressure-sensitive adhesive layer is not particularly limited; however, photocuring using an active energy ray is preferable from the viewpoint of the workability, the energy saving and the possibility of obtaining a relatively thick pressure-sensitive layer. As described above, the active energy ray is not particularly limited; however, examples of the active energy ray include an electron beam and ultraviolet ray, and ultraviolet ray is particularly preferable. The irradiation method of the active energy ray and the illuminance, the light intensity and the like of the active energy ray are not particularly limited, and are appropriately selected.

When photocuring with an active energy ray is used as the method for curing the pressure-sensitive adhesive composition for forming the pressure-sensitive adhesive layer, the irradiation method of the active energy ray may be appropriately selected, for the purpose of regulating the adhesion property such as the initial adhesive force of the pressure-sensitive adhesive sheet. Specific examples of the method for regulating the adhesion property of the pressure-sensitive adhesive sheet such as the initial adhesive force by using photocuring with an active energy ray as the method for curing the pressure-sensitive adhesive composition include the method disclosed in Japanese Patent Application Laid-Open No. 2003-13015. Japanese Patent Application Laid-Open No. 2003-13015 discloses a method for further precisely regulating the adhesion performance by performing the irradiation with an active energy ray as divided into a plurality of steps. More specifically, examples of such an method of irradiating an active energy ray include: (i) a method in which light irradiation is performed as divided into two steps, namely, a first step of performing light irradiation with an illuminance of the ultraviolet ray of 30 $mW/cm^2$ or more and a second step of performing light irradiation with an illuminance lower than that in the first step to substantially complete the polymerization reaction; and (ii) a method in which ultraviolet ray irradiation is performed as divided into three steps, namely, a first step of performing light irradiation with an illuminance of 30 $mW/cm^2$ or more, a second step of subsequently performing light irradiation with an illuminance lower than that in the first step so as to attain a polymerization percentage of at least 70% by weight, and a third step of sequentially performing light irradiation with an illuminance of 30 $mW/cm^2$ or more so as to substantially complete the polymerization reaction. Here, the polymerization percentage is derived in the same manner as in the case of the polymerization percentage of the partially polymerized substance.

Examples of the ultraviolet ray irradiation device used the aforementioned first steps include: a low-pressure mercury lamp, a high pressure mercury lamp, a super high pressure mercury lamp and a metal halide lamp. Examples of the ultraviolet ray irradiation device used the aforementioned second steps include: a chemical lamp and a black light lamp.

Hereinafter, the preferred preparation example of the base material-less-type pressure-sensitive adhesive sheet constituted only with the aforementioned pressure-sensitive adhesive layer is described with reference to the accompanying drawings, if necessary. It is to be noted that the method for preparing the pressure-sensitive adhesive sheet is not limited to the preparation example. Hereinafter, the preparation example of the base material-less-type pressure-sensitive adhesive sheet constituted only with the pressure-sensitive adhesive layer is sometimes referred to as "the preparation example 1."

Figures 5 to 8 show the first, second and third steps of the preparation example 1, respectively. Figure 8 shows the pressure-sensitive adhesive sheet obtained by the preparation example 1. In Figures 5 to 8, the reference numerals 1a, 1b and 1c denote the first, second and third steps of the preparation example 1, respectively, and the reference numeral 1d denotes the pressure-sensitive adhesive sheet obtained by the preparation example 1. In Figures 5 to 8, the reference numerals 10, 14, 11, 15 and 20 denote the pressure-sensitive adhesive composition layer, the release film (separator), the pressure-sensitive adhesive layer, the pressure-sensitive adhesive sheet and the active energy ray, respectively.

The first step of the preparation example 1 is a step of forming the pressure-sensitive adhesive composition layer 10, by applying the pressure-sensitive adhesive composition (heat-expandable fine particle-containing pressure-sensitive adhesive composition) to the release-treated surface of the release film 14 (see Figure 5). This step yields a sheet in which the pressure-sensitive adhesive composition layer 10 is formed on the release-treated surface of the release film 14.

In the first step of the preparation example 1, the coating method used when the pressure-sensitive adhesive composition is applied to the release-treated surface of the release film 14 is not particularly limited; however, examples of such a coating method include: a slot die method, a reverse gravure coating method, a micro gravure coating method, a dip method, a spin coating method, a brush coating method, a roll coating method and a flexographic printing method. When the pressure-sensitive adhesive composition is applied to the release-treated surface of the release film 14, commonly used applicators are used without being particularly limited. Examples of such an applicator include: roll coaters such as a reverse coater and a gravure coater; a curtain coater; a lip coater; a die coater; and a knife coater.

The second step of the preparation example 1 is a step of laminating the release film 14 on the side of the pressure-sensitive adhesive composition layer 10 of the sheet prepared in the first step in such a form that the release-treated surface of the release film is brought into contact with the pressure-sensitive adhesive composition layer 10 (see Figure 6). This step yields a sheet having the release films 14 on both sides of the pressure-sensitive adhesive composition layer 10 (a sheet having a layer configuration of the release film 14/pressure-sensitive adhesive composition layer 10/release film 14).

In the second step of the preparation example 1, when the pressure-sensitive adhesive composition is photocured, it is preferable to avoid the contact with oxygen which inhibits the photocuring reaction (photopolymerization reaction), and hence oxygen is blocked off by laminating the release film 14.

In the preparation example 1, the method for blocking oxygen is not particularly limited; accordingly, in addition to the method for blocking oxygen by using a release film, another method may be used in which as the environment for irradiation of active energy ray, an atmosphere of an inert gas (such as nitrogen gas) is adopted. In other words, in the second step of the preparation example 1, instead of laminating the release film 14, the inhibition of the photopolymerization reaction due to oxygen may be suppressed by adopting the inert gas atmosphere as the environment for irradiation of active energy ray, by using inert gas (such as nitrogen gas). When the pressure-sensitive adhesive composition layer 10 is photocured by using an active energy ray 20 in the inert gas atmosphere such as an nitrogen gas atmosphere, it is not necessary to coat the pressure-sensitive adhesive composition layer 10 by using the release film 14.

When the method adopting an inert gas atmosphere as the environment for irradiation of active energy ray is used as the method for protecting the contact with oxygen, oxygen is preferably contained in an as small as possible amount in the inert gas atmosphere; thus, for example, the oxygen concentration is preferably 5000 ppm or less.

When the amount of the dissolved oxygen in the pressure-sensitive adhesive composition layer 10 is large, the amount of the generated radical is suppressed, hence the polymerization (photopolymerization) is not allowed to proceed sufficiently, and the polymerization percentage, the molecular weight and the molecular weight distribution of the obtained polymer are sometimes adversely affected. Accordingly, before the pressure-sensitive adhesive composition layer 10 is formed, the pressure-sensitive adhesive composition may be subjected to a bubbling treatment with an inert gas.

The third step of the preparation example 1 is a step of irradiating both sides of the sheet obtained in the second step with an active energy ray 20 (see Figure 7). In this step, the pressure-sensitive adhesive composition layer 10 is irradiated with the active energy ray 20 through the intermediary of the release films 14, and consequently the pressure-sensitive adhesive composition layer 10 is photocured into the pressure-sensitive adhesive layer 11. In the sheet obtained in the second step, the pressure-sensitive adhesive composition layer 10 are blocked from oxygen, to be a factor inhibiting the photocuring reaction, with the release films 14.

Examples of the active energy ray 20 include: ionizing radiation such as $\alpha$-ray, $\beta$-ray, $\gamma$-ray, neutron ray and electron beam; and ultraviolet ray. Among these, ultraviolet ray is preferable. The irradiation energy and the irradiation time of the active energy ray are only required to cause the reaction of the monomer components, and are not particularly limited. Examples of the preferred mode of irradiation of the active energy ray 20 include an irradiation such that the light intensity of the ultraviolet ray having an illuminance of 1 to 200 mW/$cm^2$ in the wavelength range from 300 to 400 nm is 400 to 4000 mJ/$cm^2$.

The light source used for irradiation with ultraviolet ray as the active energy ray 20 is not particularly limited as long as the light source has a spectral distribution in the wavelength range from 180 to 460 nm (preferably from 300 to 400 nm); examples of such a light source include common irradiation devices such as a chemical lamp, a black light lamp (for example, Black Light (trade name), manufactured by Toshiba Lighting & Technology Corp.), a mercury arc lamp, a carbon arc lamp, a low-pressure mercury lamp, a medium-pressure mercury lamp, a high-pressure mercury lamp, an ultra-high-pressure mercury lamp and a metal halide lamp. Examples of such a light source also include the irradiation devices which can generate electromagnetic radiations having a wavelength longer or shorter than the aforementioned wavelengths.

The illuminance of the ultraviolet ray when irradiation with ultraviolet ray as the active energy ray 20 is performed is, for example, is set at the intended illuminance by regulating the distance from the irradiation device serving as the light source to the pressure-sensitive adhesive composition layer 10 and the electric voltage.

In the preparation example 1, when the pressure-sensitive adhesive composition layer 10 is cured, the curing is preferably performed so as for the polymerization percentage to be 90% by weight or more. The unreacted monomer may be removed by incorporating a drying step. The polymerization percentage is derived in the same manner as in the case of the polymerization percentage of the partially polymerized substance.

The reference numeral 1d denotes the pressure-sensitive adhesive sheet obtained in the preparation example 1 (see Figure 8). The pressure-sensitive adhesive sheet 15 is a base material-less-type double-sided pressure-sensitive adhesive sheet in which both sides of the pressure-sensitive adhesive layer 11 are protected with the release films 14.

Although not shown in the figure, a coloring matter-containing layer may be formed (for example, by applying) or a coloring matter-containing pressure-sensitive adhesive layer may be laminated on the surface of the pressure-sensitive adhesive layer 11.

An embodiment to be quoted is a preferred embodiment is such that, as described above, the pressure-sensitive

adhesive sheet is prepared through the following three steps: the first step of forming the pressure-sensitive adhesive composition layer by applying the pressure-sensitive adhesive composition to the release-treated surface(s) of the release film; the second step of laminating the release film(s) on the pressure-sensitive adhesive composition layer formed in the first step in such a form that the release-treated surface of the release film is brought into contact with the pressure-sensitive adhesive composition layer; and the third step of irradiating the resulting laminate with an active energy ray.

In the pressure-sensitive adhesive sheet, the 180° peeling adhesive strength (180° peeling pressure-sensitive adhesive force) (against a stainless steel plate (SUS 304BA plate), at a peeling rate: 300 mm/min, in a temperature atmosphere of 23°C) is not particularly limited, but is preferably 12 N/25 mm or more (for example, 12 to 100 N/25 mm), more preferably 14 N/25 mm or more (for example, 14 to 90 N/25 mm) and furthermore preferably 15 N/25 mm or more (for example, 15 to 80 N/25 mm). The 180° peeling adhesive strength is less than 12 N/25 mm, no sufficient adhesiveness can sometimes be exhibited to the adherend. When the 180° peeling adhesive strength is too large (for example, more than 100 N/25 mm), the strippability/dismantlability is possibly adversely affected.

The adhesion property of the pressure-sensitive adhesive sheet such as the initial adhesive force is regulated by appropriately selecting the factors such as the composition of the pressure-sensitive adhesive composition for forming the pressure-sensitive adhesive layer, the type and the used amount of the heat-expandable fine particle, the curing method at the time of preparing the pressure-sensitive adhesive layer (for example, the irradiation method of the active energy ray) and the thickness of the pressure-sensitive adhesive layer.

In the pressure-sensitive adhesive sheet, the "lifting distance" as determined by the following repulsion resistance is not particularly limited, but is preferably less than 10 mm, more preferably less than 8 mm and furthermore preferably less than 6 mm. This is because in the case of the lifting distance exceeding 10 mm, when a stress is exerted on the pressure-sensitive adhesive sheet over a long term, the pressure-sensitive adhesive sheet tends to be stripped and the adhesion reliability is possibly degraded.

In general, when a stress is exerted on the pressure-sensitive adhesive sheet over a long term under the condition that the pressure-sensitive adhesive sheet is attached to an adherend, the pressure-sensitive adhesive sheet undergoes a phenomenon such as the "detachment, lifting, partial stripping or displacement" from the adherend sometimes occurs; the "repulsion resistance" as referred to in the present application means the property capable of suppressing the occurrence of the foregoing phenomena.

(Repulsion Resistance Test)

First, the measurement surface of the pressure-sensitive adhesive sheet (the surface provided by the pressure-sensitive adhesive layer (heat-expandable fine particle-containing pressure-sensitive adhesive layer)) and the surface opposite to the measurement surface are laminated with aluminum plates to yield a laminate composed of the aluminum plates and the pressure-sensitive adhesive sheet. When the measurement surface of the pressure-sensitive adhesive sheet and the surface opposite to the measurement surface are laminated with the aluminum plates, a double-sided pressure sensitive adhesive sheet having a strong adhesiveness for use in fixing may also be used, if necessary. The resulting laminate composed of the aluminum plates and the pressure-sensitive adhesive sheet is used as the repulsion resistance test sample.

Next, the repulsion resistance test sample is bent with a curvature of R50 so as for the measurement surface to face outside. In other words, the repulsion resistance test sample is bent so as to follow the circumference of a circle having a radius of 20 mm.

The repulsion resistance test sample after the bending is laminated by pressing without causing lifting on an acrylic plate (trade name: "Acrylite," manufactured by Mitsubishi Rayon Co., Ltd.) in a form bringing the measurement surface into contact with the acrylic plate, namely, in a form bringing the pressure-sensitive adhesive sheet into contact with the acrylic plate.

The repulsion resistance test sample laminated on the acrylic plate is allowed to stand at room temperature (23°C) for 7 hours, then the lifting distance (the rising distance) from the acrylic plate at both ends (both lengthwise ends) of the repulsion resistance test sample are measured, and the average value of the measured values is derived. The resulting average value is defined as "the lifting distance."

It is preferable that the pressure-sensitive adhesive sheet gives a good evaluation of the following heat dismantlability test 1 be good. It is more preferable that as for the pressure-sensitive adhesive sheet, the evaluation of the following heat dismantlability test 1 be good and additionally the evaluation of the following heat dismantlability test 2 be good. This is because in the case where the evaluation of the following heat dismantlability test 1 is poor, when the pressure-sensitive adhesive sheet is stripped from the adherend, heating cannot sometimes bring about sufficient strippability/dismantlability. When the pressure-sensitive adhesive sheet gives a good evaluation of the following heat dismantlability test 1 and additionally gives a good evaluation of the following heat dismantlability test 2, even after a long-term (for example, for about 5 to 10 years) storage or usage at normal temperature (23°C), heating can bring about

sufficient strippability/dismantlability.

(Heat Dismantlability Test 1)

The pressure-sensitive adhesive sheet is laminated by pressing on a clean stainless steel 304 BA plate (SUS 304 BA plate), in a form bringing the measurement surface (the surface provided by the pressure-sensitive adhesive layer (heat-expandable fine particle-containing pressure-sensitive adhesive layer)) into contact with the stainless steel plate, in an atmosphere of 23°C, under the condition of a single back and forth movement of a 2-kg roller; the resulting laminate is subjected to aging at 23°C for 30 minutes to prepare an evaluation sample (a structure having a laminate configuration composed of the pressure-sensitive adhesive sheet and the stainless steel 304 BA plate).
Next, the evaluation sample is placed in a hot air dryer and heat treated at 130°C for 10 minutes while the condition of the pressure-sensitive adhesive sheet being sticked to the stainless steel 304 BA plate is being maintained.
The condition of the evaluation sample after the completion of the heat treatment is verified, and the heat dismantlability of the pressure-sensitive adhesive sheet is evaluated on the basis of the following evaluation standards.
Good (O): A case where the pressure-sensitive adhesive sheet is stripped from the stainless steel 304 BA plate, or a case where the pressure-sensitive adhesive sheet can be easily stripped from the stainless steel 304 BA plate
Poor (x): A case where the pressure-sensitive adhesive sheet cannot be easily stripped from the stainless steel 304 BA plate

(Heat Dismantlability Test 2)

The pressure-sensitive adhesive sheet is laminated by pressing on a clean stainless steel 304 BA plate (SUS 304 BA plate), in a form bringing the measurement surface (the surface provided by the heat-expandable fine particle-containing pressure-sensitive adhesive layer) into contact with the stainless steel plate, in an atmosphere of 23°C, under the condition of a single back and forth movement of a 2-kg roller; the resulting laminate is subjected to aging at 85°C for 1 week, and is allowed to stand at 23°C for 24 hours, after the completion of the aging to prepare an evaluation sample (a structure having a laminate configuration composed of the pressure-sensitive adhesive sheet and the stainless steel 304 BA plate).
Next, the evaluation sample is placed in a hot air dryer and heat treated at 130°C for 10 minutes while the condition of the pressure-sensitive adhesive sheet being sticked to the stainless steel 304 BA plate is being maintained.
The condition of the evaluation sample after the completion of the heat treatment is verified, and the heat dismantlability of the pressure-sensitive adhesive sheet is evaluated on the basis of the following evaluation standards.
Good (O): A case where the pressure-sensitive adhesive sheet is stripped from the stainless steel 304 BA plate, or a case where the pressure-sensitive adhesive sheet can be easily stripped from the stainless steel 304 BA plate
Poor (x): A case where the pressure-sensitive adhesive sheet cannot be easily stripped from the stainless steel 304 BA plate
The thickness of the pressure-sensitive adhesive sheet is not particularly limited, but is preferably 10 to 300 μm and more preferably 30 to 150 μm.

<Adherend>

The adherend for which the pressure-sensitive adhesive sheet is used is not particularly limited; however, examples of such an adherend include: a plastic adherend, a metal adherend, a fiber adherend, a paper adherend, an inorganic material adherend and a composite material adherend (composed of at least two materials of the various materials such as plastic (resin), metal, fiber, paper and an inorganic material). When the pressure-sensitive adhesive layer contains the coloring matter component, examples of the adherend preferably include a plastic adherend, a metal adherend and a composite material adherend composed of a plastic (resin) and a metal; when the pressure-sensitive adhesive layer does not contain the coloring matter component, examples of the adherend preferably include, from the viewpoint of the transmittance of active energy ray, a plastic adherend (such as polycarbonate and polyethylene terephtalate) not internally containing a metal filler or the like, and glass.
Examples of the resin constituting the plastic adherend include, without being particularly limited to, polycarbonate, polypropylene, polyester, polystyrene, phenolic resin, epoxy resin, polyurethane, ABS, acrylic resin and mixed resins of these. Examples of the metal constituting the metal adherend include, without being particularly limited to, iron, aluminum, copper, nickel, chromium, manganese, zinc, tin, titanium and alloys (such as stainless steel) of these.
As described above, the adherend preferably includes a coloring matter component-containing layer on the pressure-sensitive adhesive layer side and a coloring matter-noncontaining layer on the side opposite to the coloring matter component-containing layer; specific examples of such an adherend include a case where a glass plate having printed surfaces. The thickness of the coloring matter component is not particularly limited, but is 0.5 to 99%, preferably

1 to 50% and more preferably 2 to 30% of the thickness of the adherend.

The composition and the like of the coloring matter component-containing layer preferably have the composition and the like according to the adherend.

<Applications>

The method of stripping multiple plies of a pressure-sensitive adhesive layer of the present invention is suitably used in the applications to stripping the attachment in various fields such as vehicles, mechanical parts, electric appliances and building materials (for example, application to stripping the attachment between components and applications to stripping the attachment between components and enclosures); in particular, the method of stripping multiple plies of a pressure-sensitive adhesive layer of the present invention is particularly suitably used in the applications, demanding recycling and reworking, to stripping the attachment, and is particularly suitably used in the applications to stripping the attachment between expensive electronic components such as liquid crystal panels, plasma panels or organic EL panels and the frames thereof. It is to be noted that the applications of the method of stripping multiple plies of a pressure-sensitive adhesive layer of the present invention are not limited to the aforementioned applications.

The pressure-sensitive adhesive layer used in the method of stripping multiple plies of a pressure-sensitive adhesive layer of the present invention has the foregoing constitution, and hence, when the pressure-sensitive adhesive body and the adherend are stripped from each other, the method concerned can easily decrease the adhesive force by heating, and the pressure-sensitive adhesive body and the adherend can be stripped and dismantled without exerting the effect of the heating on the adherend. This is because the heat-expandable fine particles in the pressure-sensitive adhesive layer are expanded and/or foamed, and consequently the pressure-sensitive adhesive layer is expanded and deformed, the shape of the surface of the pressure-sensitive adhesive layer is deformed into an irregular shape, and thus, the adhesive force is degraded or lost. Accordingly, the pressure-sensitive adhesive layer used for the method of stripping multiple plies of a pressure-sensitive adhesive layer of the present invention is particularly suitably used in the applications to stripping the attachment required to allow recycling and reworking, and is particularly suitably used in the applications to stripping the attachment between expensive electronic components such as liquid crystal panels, plasma panels or organic EL panels and the frames thereof.

Examples

Hereinafter, the present invention is described in more detail on the basis of Examples; however, the present invention is not limited by these Examples.

[Preparation Method of Pressure-Sensitive Adhesive Composition]

(Preparation of Monomer Syrup A)

In a four-neck flask, 100 parts by weight of a monomer mixture composed of 2-ethylhexyl acrylate (2EHA), N-vinylcaprolactam (NVC) and isobornyl acrylate (IBXA), 1-hydroxycyclohexyl phenyl ketone (trade name: "Irgacure 184," manufactured by BASF Japan Ltd.) as a photopolymerization initiator and 2,2-dimethoxy-1,2-diphenylethan-1-one (trade name: "Irgacure 651," manufactured by BASF Japan Ltd.) as a photopolymerization initiator were placed with the following proportions and mixed.

Monomer mixture

2-ethylhexyl acrylate: 70 parts by weight
N-vinyl caprolactam: 20 parts by weight
isobornyl acrylate: 10parts by weight

Photopolymerization initiators

1-hydroxycyclohexyl phenyl ketone: 0.05 part by weight
2,2-dimethoxy-1,2-diphenylethan-1-one: 0.05 part by weight

The resulting mixture was irradiated with ultraviolet ray to be photopolymerized in a nitrogen atmosphere, until the viscosity of the mixture reached approximately 15 Pa·s (BH type viscometer, No. 5 rotor, 10 rpm, temperature: 30°C), and thus a partially polymerized monomer syrup A (a partially polymerized substance of the monomer mixture) was obtained. The polymerization percentage of the partially polymerized monomer syrup was 7.2% by weight.

(Mixing of Coloring Matter, Foaming Agent and Cross-Linking Agent)

A coloring matter and heat-expandable fine particle-containing pressure-sensitive adhesive composition was obtained by adding to 100 parts by weight of the partially polymerized monomer syrup A, the following amount of a heat-expandable fine particle and 0.04 part by weight of 1,6-hexanediol diacrylate (HDDA) as a multifunctional (meth)acrylate, and by uniformly mixing with the resulting mixture the following amount of a coloring matter component, if necessary.

Example 1

A coloring matter and heat-expandable fine particle-containing pressure-sensitive adhesive composition was obtained by using Expancel 051 Du 40 (manufactured by Expancel, Inc.) as a heat-expandable fine particle and a phthalocyanine coloring matter as a coloring matter component in the following proportions.
Expancel 051 Du 40: 30 parts by weight 1,6-hexanediol diacrylate: 0.04 part by weight phthalocyanine coloring matter: 0.1 part by weight

Example 2

A coloring matter and heat-expandable fine particle-containing pressure-sensitive adhesive composition was obtained by using F-80SD (manufactured by Matsumoto Yushi-Seiyaku Co., Ltd.) as a heat-expandable fine particle and a carbon black pigment as a coloring matter component in the following proportions.
F-80SD: 30 parts by weight
1,6-hexanediol diacrylate: 0.04 part by weight
carbon black pigment: 0.1 part by weight

Examples 3 and 4

A heat-expandable fine particle-containing pressure-sensitive adhesive composition was obtained by using F-80SD (manufactured by Matsumoto Yushi-Seiyaku Co., Ltd.) as a heat-expandable fine particle in the following proportion, but by using no coloring matter component.
F-80SD: 30 parts by weight
1,6-hexanediol diacrylate: 0.04 part by weight coloring matter component: none

Example 5

A heat-expandable fine particle-containing pressure-sensitive adhesive composition was obtained by using F-36D (manufactured by Matsumoto Yushi-Seiyaku Co., Ltd.) as a heat-expandable fine particle in the following proportion, but by using no coloring matter component.
F-36D: 30 parts by weight
1,6-hexanediol diacrylate: 0.04 part by weight coloring matter component: none

Example 6

A coloring matter and heat-expandable fine particle-containing pressure-sensitive adhesive composition was obtained by using F-80SD (manufactured by Matsumoto Yushi-Seiyaku Co., Ltd.) as a heat-expandable fine particle and a carbon black pigment as a coloring matter component in the following proportions.
F-80SD: 30 parts by weight 1,6-hexanediol diacrylate: 0.04 part by weight carbon black pigment: 0.5 part by weight

[UV Coating]

(Preparation of Coloring Matter and Heat-Expandable Fine Particle-Containing Pressure-Sensitive Adhesive Composition Layer Sheet)

The coloring matter and heat-expandable fine particle-containing pressure-sensitive adhesive composition or

the heat-expandable fine particle-containing pressure-sensitive adhesive composition was applied to the surface of a release-treated polyethylene terephthalate film (PET film, trade name: "Lumilar #50," manufactured by Toray Industries, Inc.) so as for the thickness to be 200 μm, and thus, a coloring matter and heat-expandable fine particle-containing pressure-sensitive adhesive composition layer or a heat-expandable fine particle-containing pressure-sensitive adhesive composition layer was formed; and the coloring matter and heat-expandable fine particle-containing pressure-sensitive adhesive composition layer or the heat-expandable fine particle-containing pressure-sensitive adhesive composition layer was covered with the release-treated surface of a release film (trade name: "Daiafoil MRN-38," manufactured by Mitsubishi Polyester Film Corp.), to yield a sheet (coloring matter and heat-expandable fine particle-containing pressure-sensitive adhesive composition layer sheet) having, between the two sheets of the release film, the coloring matter and heat-expandable fine particle-containing pressure-sensitive adhesive composition layer or the heat-expandable fine particle-containing pressure-sensitive adhesive composition layer.

(UV Irradiation)

The coloring matter and heat-expandable fine particle-containing pressure-sensitive adhesive composition layer sheet was irradiated with ultraviolet ray under the conditions of an illuminance of 4 $mW/cm^2$ and a light intensity of 1200 $mJ/cm^2$, and the coloring matter and heat-expandable fine particle-containing pressure-sensitive adhesive composition layer was photocured to prepare a pressure-sensitive adhesive layer.

[Preparation of Multiple Plies of a Pressure-Sensitive Adhesive Layer]

Examples 1, 2 and 6

The coloring matter and heat-expandable fine particle-containing pressure-sensitive adhesive composition layer (the pressure-sensitive adhesive layer containing a heat-expandable fine particle and a coloring matter component) was cut to a size of 20 × 20 mm to prepare an evaluation sample. From the evaluation sample, the release films were peeled off, and the evaluation sample was attached to the central portion of a polycarbonate plate (size: 40 mm in length × 40 mm in width × 2 mm in thickness) (Product No. PC1600, manufactured by Takiron Co., Ltd.) (hereinafter, sometimes referred to as the PC plate), the PET film was peeled off, and then sandwiched between glass plates (size: 100 mm in length × 100 mm in width × 1.3 mm in thickness) (manufactured by Matsunami Glass Ind., Ltd.) to prepare multiple plies of a pressure-sensitive adhesive layer having a configuration of PC plate/coloring matter component-containing pressure-sensitive adhesive layer/glass plate.

Examples 3 and 4

In the same manner as described above, the pressure-sensitive adhesive layer (not containing the coloring matter component) was attached to the PC plate, and was sandwiched between two sheets of a black printed glass (the surface glass obtained by disassembling a purchased commercially available cellular phone) (Example 3) or two sheets of a print-attached glass (the surface glass obtained by disassembling a commercially available tablet PC) (Example 4) in such a way that the print surface of the black printed glass or the print-attached glass was brought into contact with the pressure-sensitive adhesive layer; thus, two sets of multiple plies of a pressure-sensitive adhesive layer, each having a configuration of PC plate/pressure-sensitive adhesive layer/coloring matter-containing glass plate were prepared.

Examples 5

To the surface of the coloring matter component-noncontaining pressure-sensitive adhesive layer, a coloring component (Product Name: Clear Weld (Product No. LD120C), manufactured by Crystal-Lyn Chemical Co.) was diluted with a solvent and applied with a method of spraying in an amount of 0.02 part by weight. By using the thus treated pressure-sensitive adhesive layer, in the same manner as in Examples 1 and 2, multiple plies of a pressure-sensitive adhesive layer having a configuration of PC plate/pressure-sensitive adhesive layer/glass plate were prepared in such a way that the coloring matter surface was brought into contact with the glass plate.

Example 7 (Lamination into multiple plies)

In a reaction vessel equipped with a condenser, a nitrogen introducing tube, a thermometer, a dropping funnel and a stirring device, 0.2 part by weight of 2,2'-azobisisobutyronitrile as a polymerization initiator, 245 parts by weight of ethyl acetate as a solvent and 101 parts by weight of a monomer mixture having the following composition were placed, and nitrogen was circulated in the resulting composition including the monomer components in the reaction

vessel at room temperature for 1 hour. Then, the temperature of the composition including the monomer components in the reaction vessel was increased to 60°C to allow the composition to undergo polymerization in a flow of nitrogen gas for 5.5 hours and then the composition was allowed to react at 70°C for 2 hours to yield an acrylic polymer solution.

Monomer mixture

2-ethylhexyl acrylate: 70 parts by weight
N-vinyl caprolactam: 20 parts by weight
isobornyl acrylate: 10 parts by weight
hydroxyethyl acrylate: 1 part by weight

In the acrylic polymer solution, 1 part by weight of a phthalocyanine coloring matter was mixed, and the resulting pressure-sensitive adhesive was applied onto the pressure-sensitive adhesive prepared in Example 3 with a Mayer bar, and dried at 50°C to form a 3-μm thick pressure-sensitive adhesive layer. On the pressure-sensitive adhesive layer, a polyethylene terephthalate film (release liner, thickness: 38 μm) release-treated with a silicone-based release agent was laminated to yield a pressure-sensitive adhesive sheet. By using the pressure-sensitive adhesive sheet, in the same manner as in Examples 1 and 2, the multiple plies of a pressure-sensitive adhesive layer having a configuration of PC plate/pressure-sensitive adhesive layer (without coloring matter) and pressure-sensitive adhesive layer (with coloring matter)/glass plate were prepared in such a way that the coloring matter surface was brought into contact with the glass plate.

Comparative Example 1

By using the coloring matter-noncontaining pressure-sensitive adhesive layer (Example 3), in the same manner as in Examples 1 and 2, multiple plies of a pressure-sensitive adhesive layer were prepared. Specifically, the multiple plies of a pressure-sensitive adhesive layer having a configuration of PC plate/coloring matter component-noncontaining pressure-sensitive adhesive layer/glass plate were prepared.

[Evaluation]

For each of Examples and Comparative Example, the heat dismantlability was evaluated by the following evaluation method.

(Evaluation Method of Heat Dismantlability)

The object to be evaluated was placed in a laser irradiation apparatus (Nd-YAG laser, continuous wave CW laser, wavelength: 940 nm, output power: 24 W), the light condensation was regulated so as to give a spot radius of 5 mmϕ, the object was irradiated from the glass surface side thereof at a scanning speed 25 mm/sec in such a way that a power density of 122.7 W/cm$^2$ and a cumulative energy of 76.7 J/cm$^2$ were applied to the attached area of 20 mm × 20 mm, and thus the stripping condition was examined. The evaluations results thus obtained are shown under the heading of "Heat dismantlability (stripping side)" in Table 3, wherein the case where the multiple plies of a pressure-sensitive adhesive layer were able to be stripped very extremely lightly is marked with A, the case where the reduction of the adhesive force was verified is marked with B and the case where no stripping was able to be performed is marked with C.

[Table 3]

| Table 3 | Laser absorption section | Gel fraction (%) | Heat-expandable component | Adherend | Heat dismantlability (stripping side) |
|---|---|---|---|---|---|
| Example 1 | Pressure-sensitive adhesive layer | 76.3 | 051DU40 | Glass | B |

(continued)

| Table 3 | Laser absorption section | Gel fraction (%) | Heat-expandable component | Adherend | Heat dismantlability (stripping side) |
|---|---|---|---|---|---|
| Example 2 | Pressure-sensitive adhesive layer | 83.1 | F-80SD | Glass | B |
| Example 3 | Adherend (black printed glass) | 82.8 | F-80SD | Black printed glass | A |
| Example 4 | Adherend (print-attached glass) | 82.8 | F-80SD | Print-attached glass | A |
| Example 5 | Pressure-sensitive adhesive layer (surface applied) | | F-36D | Glass | A |
| Example 6 | Pressure-sensitive adhesive layer | | F-80SD | Glass | B |
| Example 7 | Pressure-sensitive adhesive layer (laminated) | | F-80SD | Glass | A |
| Comparative Example 1 | None | | F-80SD | Glass | C |

Examples enabled easy stripping (dismantling) by heating. Accordingly, Examples can be used in reworking or recycling applications. In contrast to this, Comparative Example did not allow stripping by heating to occur.

Reference Signs List

1a First step of preparation example 1
1b Second step of preparation example 1
1c Third step of preparation example 1
1d Pressure-sensitive adhesive sheet obtained in preparation example 1
1 Multiple plies of a pressure-sensitive adhesive layer
10 Pressure-sensitive adhesive composition layer
11 Pressure-sensitive adhesive layer
111 Coloring matter component-containing layer of pressure-sensitive adhesive layer
112 Coloring matter component-noncontaining layer of pressure-sensitive adhesive layer
12 Adherend
121 Coloring matter component-containing layer of adherend
122 Coloring matter component-noncontaining layer of adherend
13 Base material
14 Release film
15 Pressure-sensitive adhesive sheet
20 Active energy ray

**Claims**

**1.** A method of stripping multiple plies of a pressure-sensitive adhesive layer, comprising a pressure-sensitive adhesive

body having at least a pressure-sensitive adhesive layer containing heat-expandable fine particles and an adherend, the pressure-sensitive adhesive body and the adherend being laminated on each other,
wherein the multiple plies of a pressure-sensitive adhesive layer contain a coloring matter component, and
the pressure-sensitive adhesive body and the adherend are stripped from each other, by irradiating the coloring matter with a laser light beam having a wavelength coinciding with the absorption wavelength of the coloring matter and by expanding the heat-expandable fine particles with the aid of the heat thus generated.

**2.** The method of stripping multiple plies of a pressure-sensitive adhesive layer according to claim 1, wherein the pressure-sensitive adhesive layer contains the coloring matter component.

**3.** The method of stripping multiple plies of a pressure-sensitive adhesive layer according to claim 1 or 2, wherein the adherend contains the coloring matter component.

**4.** The method of stripping multiple plies of a pressure-sensitive adhesive layer according to any one of claims 1 to 3, wherein the pressure-sensitive adhesive body comprises a pressure-sensitive adhesive layer and a support, and the support contains the coloring matter component.

**5.** The method of stripping multiple plies of a pressure-sensitive adhesive layer according to claim 2 or 3, wherein the coloring matter component is present in the vicinity of the interface between the pressure-sensitive adhesive layer and the adherend.

**6.** The method of stripping multiple plies of a pressure-sensitive adhesive layer according to claim 5,
wherein the pressure-sensitive adhesive body comprises a coloring matter component-containing layer containing the coloring matter component on the surface, on the adherend side, of the pressure-sensitive adhesive layer, or the adherend comprises a coloring matter component-containing layer containing the coloring matter component on the surface thereof on the pressure-sensitive adhesive layer side.

**7.** A pressure-sensitive adhesive layer to be used in the method of stripping multiple plies of a pressure-sensitive adhesive layer according to any one of claims 1 to 6,
wherein the pressure-sensitive adhesive layer further comprises an acrylic polymer, and
the pressure-sensitive adhesive layer comprises 10 to 200 parts by weight of the heat-expandable fine particles in relation to 100 parts by weight of the acrylic polymer.

**8.** A pressure-sensitive adhesive layer to be used in the method of stripping multiple plies of a pressure-sensitive adhesive layer according to claim 2,
wherein the pressure-sensitive adhesive layer further comprises an acrylic polymer, and
the pressure-sensitive adhesive layer further comprises 0.01 to 5 parts by weight of a coloring matter component in relation to 100 parts by weight of the acrylic polymer.

**9.** The pressure-sensitive adhesive layer according to claim 7 or 8, wherein the acrylic polymer comprises the following monomers (a1), (a2) and (a3) as the constituents thereof.

(a1): An alkyl (meth)acrylate monomer having an alkyl group having 4 to 12 carbon atoms, and giving a glass transition temperature of lower than 0°C when polymerized into a homopolymer
(a2): A monomer having in the molecule thereof at least a nitrogen atom and an ethylenically unsaturated bond
(a3): A monomer (exclusive of the (a2)) having an ethylenically unsaturated bond in the molecule thereof, and giving a glass transition temperature of 0°C or higher when polymerized into a homopolymer [Claim 10]

The pressure-sensitive adhesive layer according to claim 9, wherein in the monomer mixture, in relation to the total amount (100% by weight) of (a1), (a2) and (a3), the content of (a1) is 50 to 80% by weight, the content of (a2) is 5 to 40% by weight and the content of (a3) is 5 to 40% by weight.

[Fig. 1]

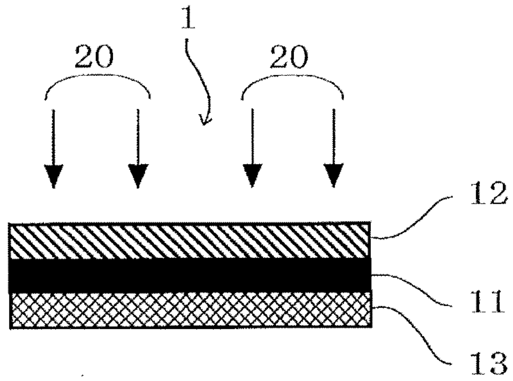


[Fig. 2]

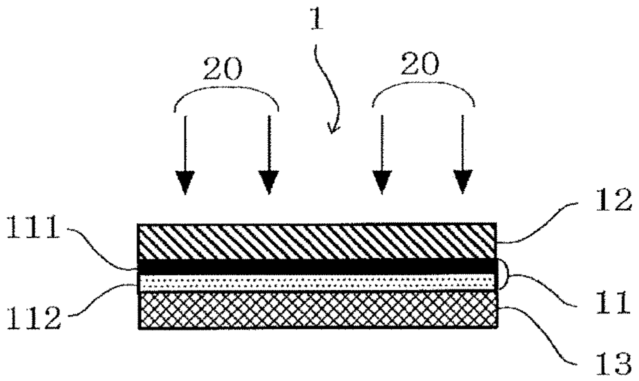


[Fig. 3]

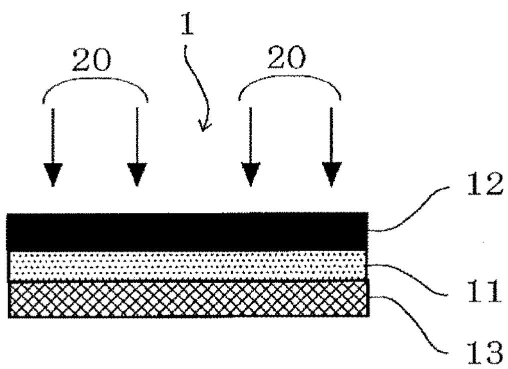

[Fig. 4]

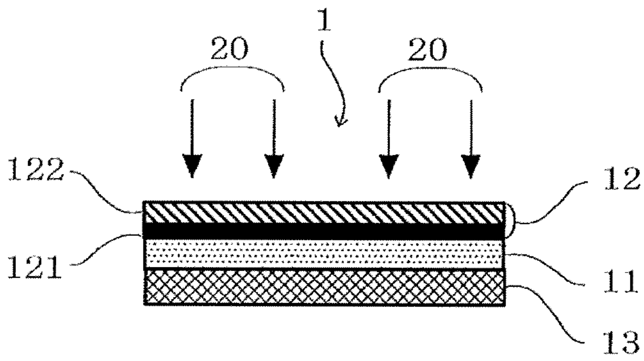


[Fig. 5]

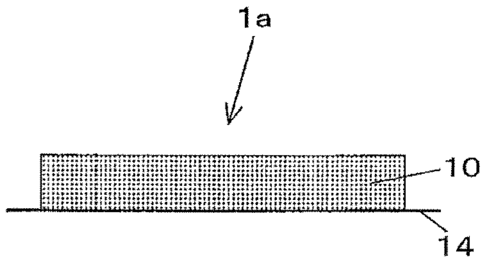


[Fig. 6]

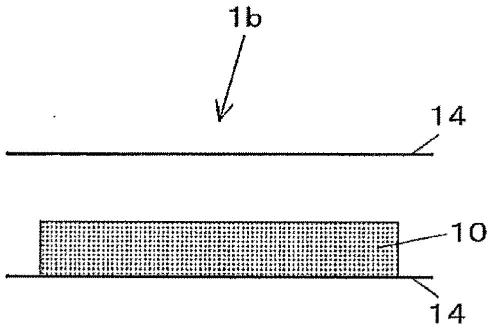

[Fig. 7]

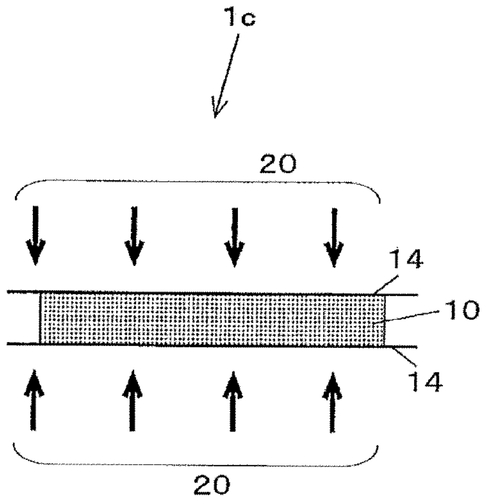


[Fig. 8]

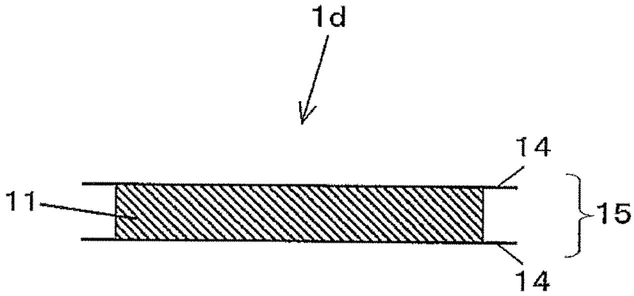

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010265375 A
- JP 2003013015 A


### Non-patent literature cited in the description


- Polymer Handbook. John Wiley & Sons, Inc, 1989